# EUROPÄISCHE PATENTSCHRIFT

(11) **EP 0 712 949 B1**
(45) Veröffentlichungstag und Bekanntmachung des Hinweises auf die Patenterteilung: **30.01.2002**
(21) Anmeldenummer: 96100630.1
(22) Anmeldetag: 22.10.1992
(51) Int. Cl.: D01H 13/32

(54) **Prozess-Steuerung im Textilbetrieb**
Process control in the textile field
Conduite de processus pour l'industrie textile

(30) Priorität: 08.11.1991 CH 327291
(43) Veröffentlichungstag der Anmeldung: 22.05.1996
(62) Teilanmeldung aus: 92810812.5
(73) Patentinhaber: MASCHINENFABRIK RIETER AG, CH-8406 Winterthur (CH)
(72) Erfinder: Meyer, Urs, Prof. Dr., CH-8172 Niederglatt (CH); Meyer, Urs Andreas, Dr., CH-8406 Winterthur (CH); Biber, Heinz, CH-8356 Ettenhausen (CH)

(56) Entgegenhaltungen:
- WO-A-90/04059
- WO-A-91/16481
- MELLIAND TEXTILBERICHTE, Bd. 68, Nr. 11, 1987, HEIDELBERG DE, Seiten 809-814, XP002021640 DIPL.-ING. GÜNTER WILMS: "Integration und Vernetzungsmöglichkeiten in der textilen Frtigung durch CIM"

## Beschreibung

Die Erfindung bezieht sich auf Prozess-Steuerungs-Systeme insbesondere für Spinnereien.

### Stand der Technik

Die Idee der computergesteuerten Spinnerei schwebt seit mindestens zwanzig Jahren vor den Augen der Fachwelt - siehe zum Beispiel: US 3922642; BE 771277; BE 779591.

Die Anstrengungen in dieser Richtung haben sich in den letzten Jahren vervielfacht - zum Beispiel: DE-OS 3906508; US-PS 4563873; US-PS 4665686 und EP-PS 0410429.

Als Zwischenstufe auf dem Weg zum Prozessleitsystem erschien seit 1980 die Prozessdatenerfassung, die zum Beispiel im Artikel "Die Prozessdatenerfassung als Führungsinstrument" von W.Kistler im "Textil praxis international" vom Mai 1984 beschrieben wurde. Die Weiterentwicklung der Prozessdatenerfassung kann dann durch die folgenden Artikel verfolgt werden:
i) "Mikroelektronik - heutige und zukünftige Einsatzgebiete in Spinnereibetrieben" von Marcel Zünd in "Melliand Textilberichte", Juni 1985,
ii) Zellweger Uster: Conedata 100 for Quality and Productiviy in Winding" in Textile World, vom April 1986,
iii) "A Quality Analysis System for OE based on an absolute detector" von Dan Claeys, im Canadian Textile Journal vom Mai 1986, wo das "Downloading" von Einstellungen für Garnreiniger vorgesehen ist.

Das Reutlinger Spinnerei-Kolloquium vom Dezember 1986 wurde der Informationsverarbeitung gewidmet und allgemeine Ueberlegungen für die Anwendung vom Prozessleitsystem in der Spinnerei wurden vorgelegt z.B. im Artikel "Integration der Information im Textilbetrieb - Ueberlegungen zum textilen CIM" (Dr. T. Fischer).

Anforderungen an ein Informationssystem sind dann im Artikel "Integrierte Informationsverarbeitung als Instrument der Unternehmungsführung" in Melliand Textilberichte, 11/1987, Seite 805 bis 808, aufgeführt worden und Ansätze für moderne Lösungen sind im Artikel "Integration und Vernetzungsmöglichkeiten in der textilen Fertigung durch CIM" auf den Seiten 809 bis 814 der gleichen Zeitschrift zu finden.

Als Stand der Technik im Januar 1991 kann das BARCO CIM System aufgeführt werden. Dieses System ist in der Veröffentlichung "CIM in Spinning" der Fa. Barco Automation Inc. Charlotte, NC, USA dargelegt worden. Es sieht eine "Dateneinheit" (Maschinenterminal) pro Maschine vor, wobei der Prozessleitrechner (die Zentrale) mit den Dateneinheiten der Maschinen Signale austauscht. Die Dateneinheit (mit ihren Anzeigen) dient auch als Bedienerunterstützung. Obwohl die vorerwähnte Veröffentlichung die bidirektionale Kommunikation erwähnt, ist das System offensichtlich primär noch auf die Datenerfassung auf der Maschine und Weiterleitung an die Zentrale eingerichtet. Eine Verbindung mit der Maschinensteuerung ist weder gezeigt noch angedeutet. Solche Dateneinheiten lassen sich in einem einzigen Netzwerk integrieren, was die System-Architektur vereinfacht - allenfalls auf Kosten der System-Flexibilität und der Reaktionsgeschwindigkeit. Ausserdem, da keine echte zentrale Steuerung vorgesehen ist, wird nichts unternommen, um die mit dem Netzwerk verbundenen Maschine vor den Auswirkungen eines Netzwerkdefektes bzw. Ausfalls zu schützen. Eine Weiterentwicklung dieses Systems ist im Artikel "Fadenbruchdetektor für Ringspinnmaschinen" in Melliand Textilberichte vom September 1991 (ITMA Ausgabe) aufgeführt.

Prozessleitsysteme gehören heute in gewissen Industrien zum lang eingeführten Stand der Technik. Es fragt sich, wieso diese "bekannten Prinzipien" nicht ohne weiteres im Textilbetrieb realisieren lassen sondern nur mühsam, schrittweise zur Anwendung kommen. Die Antwort liegt zum Teil in der Tatsache, dass ein Prozessleitsystem nur schwer einen Maschinenkomplex (wie z.B. einen Spinnereibetrieb) "auferlegt" werden kann. Prozessleitsysteme lassen sich relativ leicht einführen, wo die Informatik und die Prozesstechnologie gleichzeitig entwickelt werden. Dies ist z.B. im Bereich der Chemiefaseraufbereitung (Filamentspinnerei) eher der Fall, so dass schon in Dornbirn Konferenz des Jahres 1981 die Einführung von Prozessleitsystemen in die Filamentspinnerei vorgesehen werden konnten (Vortrag von K. Ibounig - "Wandel der Prozessleittechnik durch die Mikroelektronik").

Die Technologie der Kurz- und Langstapelfaserspinnereien bzw. die Gestaltung der Maschinen dieser Spinnereien lassen sich nicht schnell ändern. Die Informatik muss sich hier an einen langsameren Entwicklungsgang des Prozesses selber anpassen. Ein realisierbarer Vorschlag für ein Prozessleitsystem in einem Spinnereibetrieb muss die Gegebenheiten des Spinnereibetriebes berücksichtigen. Die für das Prozessleitsystem zutreffenden Aspekte werden daher kurz aufgeführt.

Als nächstliegender Stand der Technik wird auf die eigene PCT-Anmeldung WO 91/16481 verwiesen, welche eine Ausführung zeigt, bei der die an der Maschine ermittelten Störsignale an einen übergeordneten Prozessleitrechner überführt werden und zur Behebung der Störung der entsprechenden Bedienperson zugeordnet wird. Dabei erfolgt eine Auswertung, bzw. Gewichtung von einzeln übermittelten Störmeldungen und die Erstellung einer Meldeliste entsprechend der Dringlichkeit der Signale.

### Informatik/Prozesstechnologie (Automatisierung)

Die Informatik in der Spinnereianlage steht im Gesamtrahmen der Automatisierung. Ihr Zweck ist letztlich eine bessere Beherrschung der Garnproduktion. Massstab sind die Produktionskosten. Die Randbedingungen werden vom Rohmaterial-Markt, von den lokalen betrieblichen Gegebenheiten und von den Garnabnehmern bestimmt. Die nachfolgenden Ausführungen beziehen sich auf die Verhältnisse in der Kurzstapel-Spinnerei. Als Beispiel dient das Ringspinnen eines Garnes aus gekämmter Baumwolle. Die Erfindung ist aber in anderen Spinnereien und zur Herstellung von anderen Endprodukten anwendbar.

Der Spinnprozess umfasst die Umwandlung eines Naturproduktes mit nur begrenzt vorhersehbaren Eigenschaften in ein genau spezifiziertes Zwischenerzeugnis (Garn). Durch die Aufteilung in eine Reihe verschiedener Stufen ist die Garnherstellung darüber hinaus prozesstechnisch besonders anspruchsvoll.

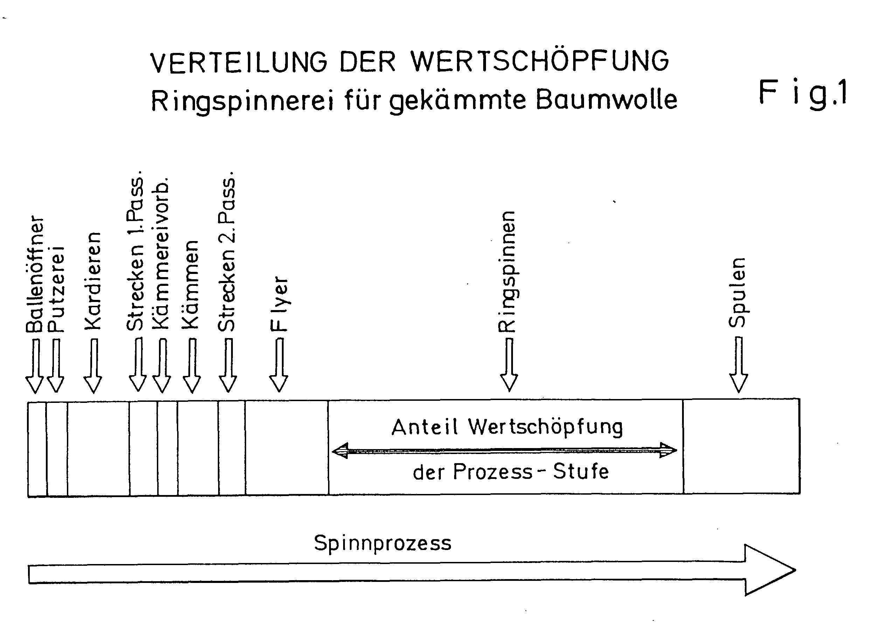

Wie die Fig. 1 zeigt, ist die Wertschöpfung auf die einzelnen Prozessstufen der Spinnerei ungleich verteilt: In der Putzerei und der Karderie steht die Reinigungswirkung im Vordergrund, welche in erster Linie einen grossen Einfluss auf das Laufverhalten im abschliessenden Verspinnen der Fasern hat. Massgebend für die Eigenschaften des fertigen Garnes sind die darauf folgende Prozessschritte Kämmerei und Strecken, da sie dem Veredeln des Rohstoffes und dem Vergleichmässigen des Faserverbandes dienen. Diese Abschnitte der Produktion stellen in der heutigen Spinnerei nur einen beschränkten Teil der Wertschöpfung dar, sind aber für die Prozess-Beherrschung entscheidend. Hier beschränkt sich das Nutzen-Potential vornehmlich auf das Ausnützen von kostengünstigem Rohstoff. Im Endspinnverfahren liegt schliesslich der Grossteil der Wertschöpfung. An dieser Stelle entsteht das qualitativ genau spezifizierte Garn, und am Schluss an das Endspinnen steht die Prüfung auf "Gut" oder "Minderwertig" (oder sogar "Aussschuss").

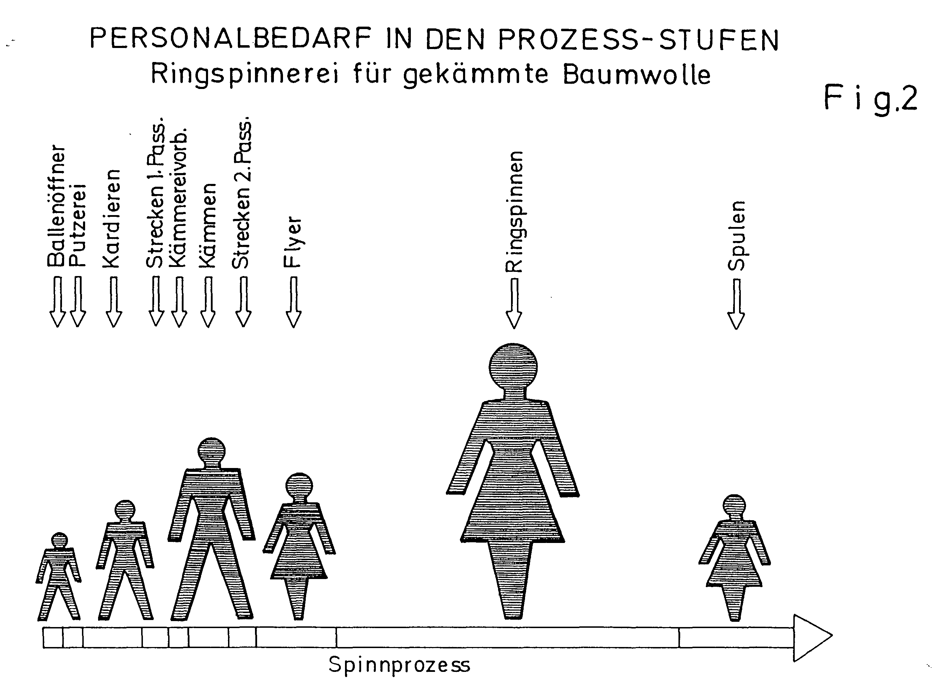

Eine weitere Untersuchung der Wertschöpfung zeigt, dass das wesentlichste Verbesserungspotential im Personalbedarf liegt. Das Ringspinnverfahren ist hier besonders exemplarisch. Fig. 2 zeigt den Personalbedarf in den verschiedenen Prozessstufen. Die Bedienung erfordert zwar keine lange Ausbildung aber eine ausgesprochen hohe Zuverlässigkeit. Ein einziges Verwechseln zweier Vorgarnspulen in der Nachtschicht genügt, um schlimmstenfalls die gesamte Produktion mehrerer Tage unbrauchbar zu machen - und dies wird unter Umständen erst beim Färben des fertigen Gewebes erkannt. Gerade ältere Anlagen verlangen besonders gewissenhaftes und aufmerksames Bedienungspersonal.

Eine ganz wesentliche Komponente in der Prozessbeherrschung ist das Hochfahren, Umstellen und Stillsetzen der Produktionslinie. Hier liegt ein besonders attraktives Ziel für die Automatisierung: das heute in Westeuropa weit verbreitete Stillsetzen der Anlage über das Wochenende bringt nicht nur kostspielige Stillstandszeiten, sondern eine ausgesprochene Unruhe in den Prozess. Jeder Stillstand einer Maschine stellt eine Störung dar und bringt nach kurzer Zeit weitere vorgelagerte oder folgende Maschinen aus dem Produktionstakt. Das Hochfahren einer Spinnereianlage ist prozesstechnisch immer riskant. Priorität bei der Automatisierung hat deshalb nicht etwa das selbsttätige Hochfahren der Anlage, sondern das Vermeiden von Stillständen. Durch personalarme Schichten bei Nacht oder am Wochenende lässt sich das Hochfahren künftig weitgehend vermeiden.

Beherrschte Spinntechnologie und Automatisierung stehen in gegenseitiger Abhängigkeit. Nur ein gutmütiger Prozess lässt sich automatisch bewältigen. Unvorhergesehene, plötzliche Abweichungen der Fasereigenschaften stören die Produktion genau so wie technisch bedingte Stillstände einzelner Maschinen. Auch wenn die mittlere Durchlaufzeit eines Material-Elementes vom Faserballen bis zum Garn mehrere Tage dauert, sind bei manchen Prozessstufen Eingriffstakte im Minutenbereich einzuhalten, um den Materialfluss aufrecht zu erhalten. Die Organisation und Führung des Spinnereibetriebes ist deshalb eng verknüpft mit dem Produktionstakt der einzelnen Maschinen.

Ursprünglich waren die Bereiche Putzerei - Karderie - Vorwerke - Endspinnen und Spulen jeweils einzelne Meistereien, prozesstechnisch getrennt durch Materialpuffer. Die Voraussetzungen dazu bestehen heute nicht mehr. Trotz stark erhöhter Produktionsrate ist die Bedienung einer ganzen Prozessstufe oder mehrerer verbundener Maschinen durch eine einzige Person heute schon durchaus üblich. Der Prozessablauf wird dadurch um so empfindlicher für Störungen, und die Personalreserve für ungeplante Eingriffe fehlt weitgehend.

Hieraus ergibt sich die Maschinenüberwachung als erstes Einsatzfeld für die InformatikVernetzung. Aus der Statistik der Laufzeiten und Stillstände lassen sich Schlüsse ziehen, die zu einem effizienteren Personaleinsatz führen. Die Überwachung der Qualität von Streckenband und Garn erlaubt als nächstes die Diagnose von Störungen im spinntechnologischen Prozessablauf. Sie erleichtert damit die zeitgerechte Instandhaltung der Maschinen.

Beide Aufgaben sind heute technisch gelöst, soweit es die einzelnen Produktionsmaschinen mit ihrer individuellen Bedienung zulassen. Diese Überwachung findet aber ihre eng gesteckten Grenzen in einem Mangel an Information, bedingt durch die manuelle Abwicklung der Transporte und weiterer wichtiger Eingriffe:
- Nur die Stillstände, nicht aber deren Begründung werden automatisch erfasst. Für die Störungs-Statistik bedarf es weiterhin auf Mitwirkung des Bedieners.
- Der Materialfluss ist nicht kontrolliert. Das Fortpflanzen eines Fehlers lässt sich nur mit Mutmassungen verfolgen.
- Technologisch bedeutsame Eingriffe wie das Beheben von Fadenbrüchen oder das Entfernen von Wickeln werden nur indirekt erfasst, beispielsweise über die Stillstandszeit der Spinnstelle oder der Maschine.
- Schliesslich zeigt die Statistik lediglich die Vergangenheit auf. Sie lässt mannigfaltige Fehlschlüsse zu. Ein rasches Eingreifen, Voraussetzung für eine zeitgerechte Fehlerbehebung, erfordert nach wie vor die Kontrollrunde einer aufmerksamen Bedienungsperson.

Weitere Schritte in der Prozessüberwachung sind deshalb auf die Automatisierung der wichtigsten Bedienerfunktionen angewiesen. Zur Beurteilung verschiedener Informatik-Konzepte ist es wichtig, diese im Umfeld der übrigen Automatisierungsfunktionen zu betrachten.

Der wirtschaftliche Druck zur Einführung der Automatisierung entsteht vornehmlich an den Stellen des grössten Personalbedarfes. Im Vordergrund stehen hier das Fadenansetzen sowie der Transport und Austausch der Vorgarnspulen. In der Rotorspinnerei, wo das automatische Fadenansetzen bereits zum Stand der Technik gehört, stellen der Transport der Spinnkannen im Vorwerk und das Abtransportieren der Garnspulen das künftige Schwergewicht dar.

Die hier aufgeführten Funktionen sind eine Basis für die Informatikvernetzung, welche ergänzt wird durch die heute schon realisierte Qualitäts-Erfassung an der Karde, der Strecke (z.B. nach unserer PCT Patentanmeldung Nr. PCT/CH/91/00140)und der Spulmaschine. Zur Zeit stehen verschiedene Teile dieser Automatisierung im Stadium der Entwicklung und haben noch keinen breiten Einsatz gefunden. Gerade dies ist aber bei Konzepten für die Informatikvernetzung zu berücksichtigen. Hier würden bei zu knapper Dimensionierung der Uebertragungskapazität wertvollste Zukunftschancen verbaut.

Bei allem Einsatz von Bedienungsrobotern und Transportsystemen ist abzusehen, dass eine ganze Reihe von Bedienvorgängen vor allem im Bereich der Ausnahmesituationen und der Instandhaltung dem menschlichen Bediener vorbehalten bleiben. Die nun knappst gehaltene Bedienungskapazität muss demzufolge nach genauen Prioritäten eingesetzt werden - eine wichtige und vor allem zeitkritische Aufgabe im Bereich der Bedienerunterstützung. Die praktische Erfahrung in den Pionierbetrieben, welche einzelne Automatisierungsschritte bereits verwirklicht haben, bestätigt die entscheidende Rolle eines Alarmsystems. Der richtige Mann am richtigen Ort wird zum Kriterium für den Betrieb der Gesamtanlage. Dies lässt sich durch Kommunikation von Person zu Person nicht mehr gewährleisten, weil bereits das Suchen eines Mitarbeiters in der Anlage einen ausgedehnten Rundgang von mehreren Minuten erfordert.

Aehnlich zeitkritische Abläufe entstehen durch die Verkettung im Materialfluss. Die traditionelle Entkoppelung der einzelnen Prozessstufen durch grosse Zwischenlager entspricht nicht den Anforderungen einer flexiblen, qualitativ straff überwachten Produktionslinie. Transportautomatisierung bedeutet deshalb für die Informatik den Schritt von der Überwachung zur Steuerung bestimmter Übergabestellen und somit die direkte Einbindung in den Prozess. Ein Ausfall der Steuerfunktion ist unmittelbar gleichbedeutend mit einer Störung in der Produktion. Die Zuverlässigkeit der Informatik ist für den Betrieb gleich wichtig wie etwa diejenige des Buchungssystems einer Fluggesellschaft: Jeder Ausfall hat innerhalb von Minuten schwere Folgen. Der Hersteller von Spinnereianlagen betrachtet das Thema Informatik-Netzwerk deshalb aus der Sicht des Gesamtprozesses und sieht darin weit mehr als eine PC-Applikation oder eine Ergänzung zur betriebsinternen Datenverarbeitung.

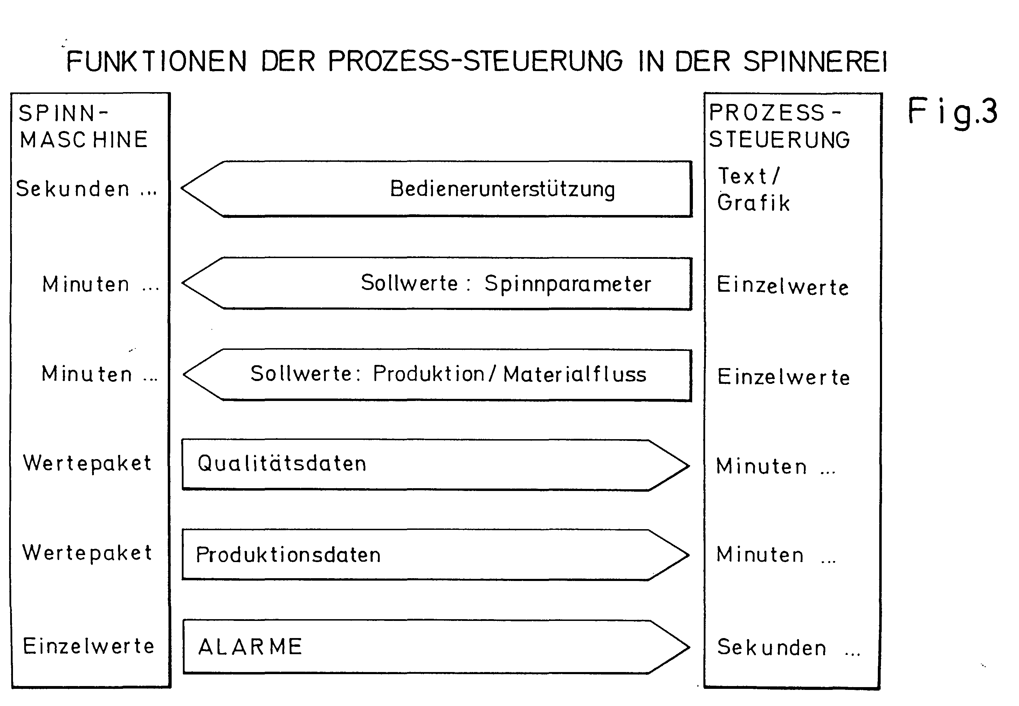

Fig. 3 fasst die Funktionen und die Anforderungen an die zeitlichen Fähigkeiten der Prozesssteuerung in der Spinnerei zusammen.

Grundsätzlich kann man zwei bisherige Ansatzpunkte für die Konzeption einer vernetzten Prozess-Informatik-Lösung unterscheiden:
- Das Ausweiten der Produktionsplanung und -steuerung in die Produktionslinie hinein bis zur einzelnen Prozessstufe und Maschine, gleichbedeutend mit einer Einführung der Informatik von oben nach unten.
- Das Ausgestalten der Qualitätsüberwachung mit Einbezug der Materialflussüberwachung zu einer vollen Prozessüberwachung. Dieses Vorgehen entspricht einer Weiterentwicklung der bekannten Systeme zur Betriebsdaten- und Qualitätserfassung.

### Konzeptuelle Aspekte der Erfindung

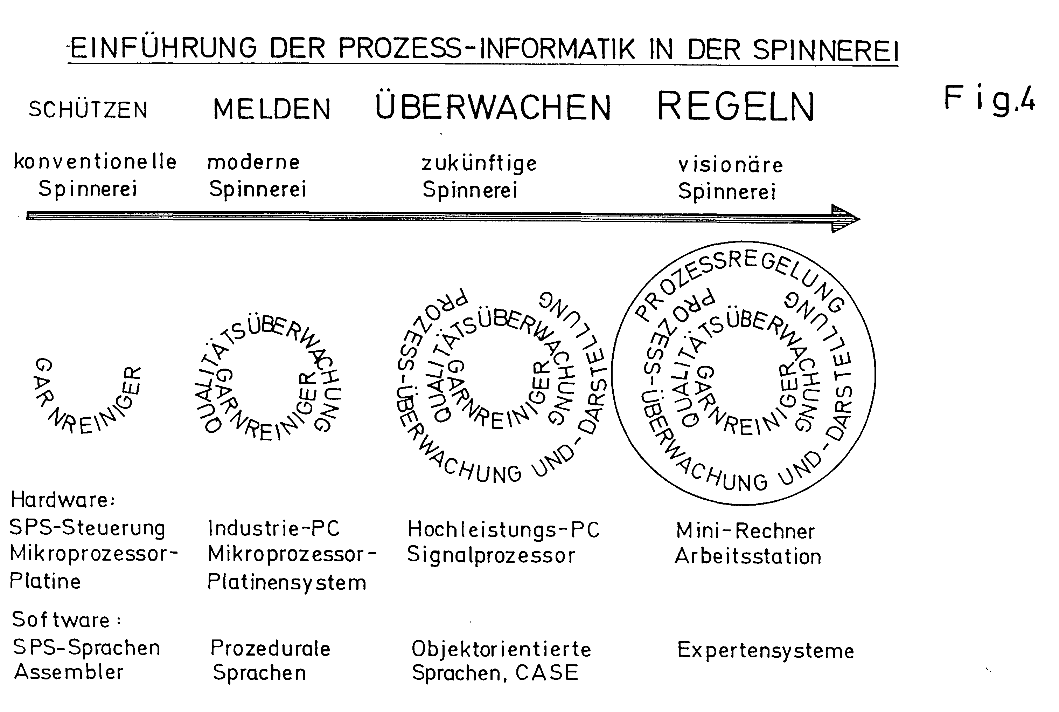

Dieser Erfindung liegt ein drittes Konzept zugrunde, nämlich der Einführung neuer Spinnereimaschinen mit steuerbaren Eigenschaften für den Betrieb mit geschlossenem Regelkreis. Dazu gehört auch die Störungsbehebung durch Bedienungsroboter (Normalfall) und Bedienungspersonal (Ausnahmefall, Instandsetzung). Dieses Konzept bedeutet die Umstellung auf eine eigentliche Prozessregelung. Sie setzt einen hohen Grad der Automatisierung und Prozessüberwachung voraus. Fig. 4 fasst einen entsprechenden Ueberblick der Einführung der Prozess-Informatik in der Spinnerei zusammen.

Das Konzept an und für sich ist nicht neu - Ansätze dafür findet man im Stand der Technik, der in dieser Anmeldung erwähnt ist. Das Konzept ist aber bislang in der Spinnerei nicht konzequent durchgesetzt worden.

Der Schritt in die Prozessregelung erfordert eine leistungsfähige, auch auf zukünftige Aufgaben ausgelegte Kommunikation. Die zur Zeit übliche Norm-Schnittstelle genügt für die Betriebsdatenerfassung, nicht jedoch für die Prozessführung verbundener Maschinen. Dabei liegt die Grenze der Anwendungsmöglichkeiten nicht nur in der Übertragungskapazität:
- Die Prozessregelung selbst ist auf höchste Betriebssicherheit, die damit verbundene Bedienerführung (Alarme) dagegen auf grosse Geschwindigkeit und hohen Daten-Durchsatz angewiesen. Beide Funktionen des Netzwerks haben unmittelbaren Einfluss auf den Prozess-Ablauf. Da die regelmässigen Kontrollgänge des Bedieners entfallen, wird eine moderne, stark automatisierte Spinnereianlage auf ein gut ausgebautes Alarm-System absolut angewiesen sein.
- Eine umfassende Verdichtung und Auswertung der Sensor-Signale, etwa als Spektrogramm, lässt sich wegen der erforderlichen Rechenkapazität nicht mehr in jeder Maschinensteuerung vollziehen. Eine leistungsfähige Qualitätserfassung muss deshalb Zugriff haben auf die Rohdaten direkt ab Sensor. Eine vorherige Verdichtung durch eine lokale Auswerte-Einheit macht eine künftige Erweiterung der Funktionen äusserst aufwendig. Die Übertragung von Rohdaten ist zwar nicht zeitkritisch und erträgt Kompromisse in der Zuverlässigkeit, erfordert aber einen grossen Daten-Durchsatz.
- Die praktische Erfahrung mit handelsüblichen Schnittstellen zeigt, dass für die Anwendung nur noch mit einem Zehntel der theoretisch verfügbaren Übertragungsleistung gerechnet werden kann. Der Rest wird für die Selbstüberprüfung, die Steuerung des Datenverkehrs und als Reserve für Spitzenbelastungen benötigt.

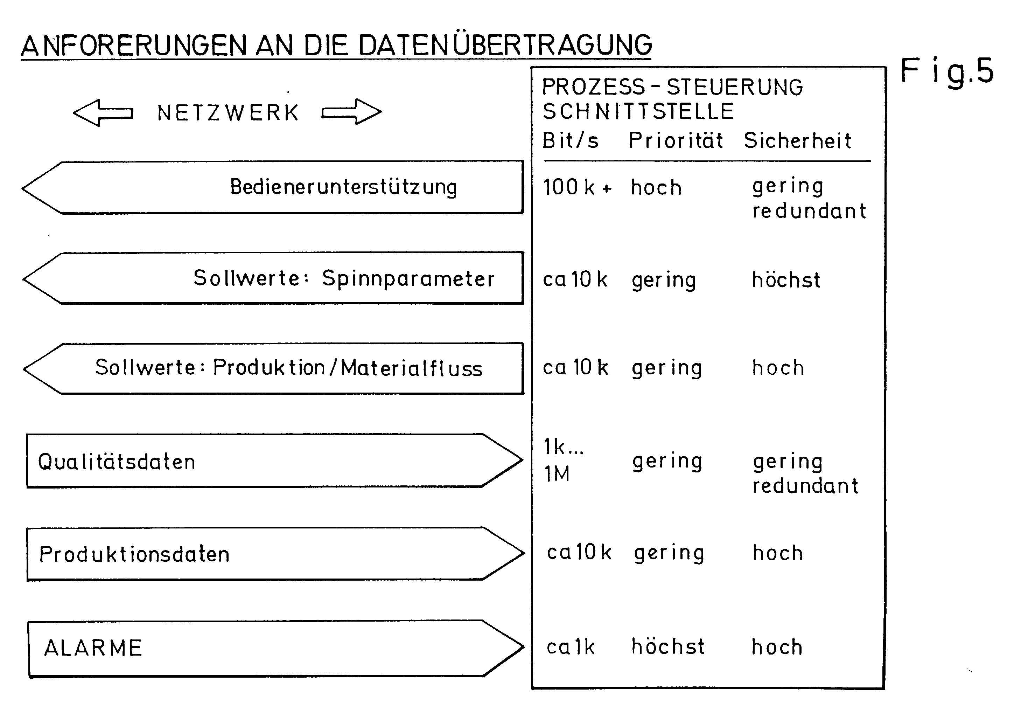

Fig. 5 fasst die Anforderungen an die Datenübertragungsfähigkeiten eines Netzwerkes, das zur Erfüllung der in Fig. 3 aufgezeigten Funktionen ausgelegt ist.

Hieraus ergibt sich ein Informatik-Konzept, das auch im "Hauptproblemgebiet" (in der Endspinnstufe vom Bedienungsroboter bis zum Transportsystem, vom Flyer bis zum einzelnen Garnreiniger sämtliche für den Prozess wesentliche Maschinen, Bedienstellen und Sensoren verbinden kann. Dabei wird es voraussichtlich notwending, das Netz zu unterteilen, um die vielen Anschluss-Stellen zu bewältigen. Vorzugsweise ist der freie Zugriff des Prozessleitrechners zu allen Schnittstellen in der Anlage, eingeschlossen die Alarmierung des Bedienungspersonals vorzusehen. Nach diesem Konzept lässt sich die Kommunikation stufenweise aufbauen und mit überschaubaren Mitteln auch erneuern. Das gemeinsame Element ist der leistungsfähige Prozessleitrechner, der mit den nötigen Schnittstellen-Treiber versehen werden muss. Die einzelnen Maschinensteuerungen müssen über vernetzbare Schnittstellen für die bidirektionale Datenübertragung verfügen und zumindest den jeweiligen Betriebszustand melden.

Die Wahl der einzelnen Schnittstellen-Protokolle ist von geringerer Bedeutung als gemeinhin angenommen wird. Eine Selbstverständlichkeit in diesen Systemen ist die serielle Datenübertragung. Die mit Zweidraht-Leitungen arbeitenden Übertragungsnormen RS 232, RS 422 und RS 485 dürften für die zweite Hälfte der 90er Jahre nicht mehr genügen: Kapazität und Reichweite sind bereits heute knapp für Anlagen mit einigen Dutzend Anschluss-Stellen und Leitungslängen bis zu mehreren hundert Metern (vgl. "Datenschnittstellen an Textilmaschinen: Zwischenbericht über die Ausschusstätigkeit der VDI-Fachgruppe Textil und Bekleidung" in Melliand Textilberichte, 11/1987, Seite 825). Mit der Unterteilung in mehrere Netze entstehen trotzdem brauchbare Lösungen mit dem Vorteil der kostengünstigen Verkabelung. Eine zukunftssichere Investition ist die Vernetzung mit Koaxialkabel, wie sie in der kommerziellen EDV üblich ist. Der von der amerikanischen Industrie ausgehende Entwurf MAP basiert auf dieser Technik, ebenso das von Rieter gewählte RIELAN. Ein künftiger Einsatz von Lichtleitern ermöglicht zumindest dieselbe Übertragungskapazität.

Die Telekommunikation nimmt bei der Entwicklung der Netzwerkstandards auf die Textilindustrie kaum Rücksicht. In die Wahl kommen deshalb nur Produkte mit weiter industrieller Verbreitung, schon um die nötige Einsatzdauer und Zuverlässigkeit zu gewährleisten. Die benötigten Hardware-Komponenten und Software-Treiber sind genau spezifiziert und müssen nicht mehr besonders entwickelt werden.

### Die Erfindung

Die Erfindung sieht entsprechend dem letzterwähnten Konzept eine Spinnereianlage mit einem Prozessleitrechner für mindestens eine Maschinengruppe vor, wobei jede Maschine der Gruppe mit einer eigenen Steuerung versehen ist, welche die Aktorik der Maschine samt allfälliger dieser Maschine zugeordneten Hilfsaggregate steuert, und. ein Netzwerk für die bidirektionale Kommunikation zwischen dem Rechner und jeder Maschine der Gruppe , wobei zumindest eine Maschine der Gruppe sowohl mit prozesswesentlichen als auch mit prozessredundanten Sensoren versehen ist, die Ausgangssignale erzeugen, welche zusammen. ein Abbild des Zustandes der Maschine ermöglichen und Mittel vorgesehen sind, um die Rohdaten sowohl der prozesswesentlichen wie auch der prozessredundanten sensoren über das Netzwerk an den Prozessleitrechner weiterzuleiten und dadurch gekennzeichnet ist, dass der Rechner mit Software versehen ist, um die Rohdaten zu speichern, allfällige Korrelationen zwischen den gespeicherten Rohdaten der Sensoren von vorbestimmten Sensorenkombinationen zu ermitteln, Steuerbefehle in Abhängigkeit von ermittelten Korrelationen zu erzeugen und diese Steuerbefehle über das Netzwerk an die Steuerung der Maschine zu senden, wofür die Korrelationen ermittelt wurden.
Steuerbefehle vom Prozessleitrechner werden im Betrieb der Anlage über das Netzwerk an die Maschinensteuerungen geleitet. Jede Maschinensteuerung leitet die Steuerbefehle an die von dieser Steuerung gesteuerte Aktorik weiter, wobei die Steuerbefehle wenn notwendig durch die Maschinensteuerung in für die Aktorik geeigneten Steuersignale verwandelt werden.

Die Uebertragung der Steuerbefehle kann unmittelbar vom Prozessleitrechner an die Maschinensteuerungen erfolgen. Diese Uebertragung kann aber auch über eine weitere Vorrichtung erfolgen, z.B. über eine "Maschinenstation" des in EP 0 365 901 beschriebenen Typs. Wichtig ist aber, dass weder der Prozessleitrechner noch eine übertragende Vorrichtung (wie solche Maschinenstationen) den direkten Zugriff auf die Aktorik der Maschine gewährt wird. Stattdessen kann eine Aenderung des Maschinenzustandes, welche einen Eingriff in die Aktorik verlangt, nur mittels der Maschinensteuerung (und nach dem in dieser Steuerung effektiven Arbeitsprogramm) bewirkt werden.

Die Verbindung der Maschinensteuerung mit ihrer (gesteuerten) Aktorik kann unabhängig vom Kommunikationsnetzwerk zwischen der Maschinensteuerung und dem Prozessleitrechner gestaltet werden und kann sogar verschieden für verschiedene Aktorikelemente (bzw. Hilfaggregate) sein. Im Fall einer Maschine mit einer Vielzahl von Arbeitsstellen (z.B. einer sogenannten Längsteilmaschine) und mit einer autonomen Steuerung für jede Arbeitsstelle kann die Verbindung zwischen der Maschinensteuerung und der vorhandenen Aktorik über die autonomen Arbeitsstellensteuerungen realisiert werden, beispielsweise nach DOS 3928831 oder nach DOS 3910181 oder nach DPS 3438962.

In einer Ringspinnmaschine ist es heute unwahrscheinlich, dass die Kommunikationsverbindung zwischen der Maschinensteuerung und den Arbeitsstellensteuerungen auch für die Signalübertragung zwischen der Maschinensteuerung und einem für alle Arbeitsstellen gemeinsamen Hilfsaggregat (z.B. einem Doffaggregat einer Ringspinnmaschine) auszunutzen wäre. Bei dem neuen Spinnverfahren ist es aber vorhersehbar, dass das Hilfsaggregat als ein fahrbarer Automat ausgeführt und für die Kommunikation mit einer Zentrale über die Arbeitsstellen ausgelegt ist, wie z.B. in EP 0295406 vorgesehen ist.

In Abhängigkeit von der Ausführung der Aktorikelemente kann die Signalverbindung mit der Maschinensteuerung auf elektrischem, optischem, magnetischem, pneumatischem, mechanischem (oder anderen) Signalübertragungsmittel beruhen.

Auf jeden Fall ist jede Maschinensteuerung in der Lage, die vom Prozessleitrechner erhaltenen Steuerbefehle in geeignete Signale für ihre eigenen Aktorikelemente zu übersetzen (umzuwandeln). Der Prozessleitrechner kann dementsprechend mit einem einzigen Satz von Steuerbefehlen für einen gegebenen Maschinentyp arbeiten, gleichgültig ob die mit dem Prozessleitrechner verbundenen Maschinen dieses Typs mit der gleichen oder mit unterschiedlichen Aktorikelementen bzw. Hilfaggregaten ausgerüstet sind.

Die Sensorik der Maschine umfasst vorzugsweise zumindest eine Sicherheitssensorik, welche zur Signalübertragung mit der Maschinensteuerung verbunden ist. Die Maschinensteuerung ist vorzugsweise mittels der Sensorik kontinuierlich in der Lage, ein Abbild des Zustandes (insbesondere des Sicherheitszustandes) der Maschine zu erzeugen. Die Maschinensteuerung kann dann derart programmiert sein, dass sie erst bzw. nur dann einen Steuerbefehl vom Prozessleitrechner ausführt, wenn nach dem Abbild des Zustandes der Maschine ohne Gefährdung von Personen, Maschinen oder Bedienungseinrichtungen die Maschine in den neuen Zustand überführt werden kann. Der "Sicherheitszustand" der Maschine umfasst daher sowohl die Sicherheit der menschlichen Bedienung als auch diejenige von allfälligen an der Maschine vorhandenen fahrbaren Bedienungseinrichtungen (insbesondere Bedienungsautomaten) und in der Maschine integrierten Elemente. Dies ist natürlich von besonderer Bedeutung in Zusammenhang mit Menschen, die sich jederzeit frei im Bereich der Maschine bewegen können, aber auch in Zusammenhang mit allfälligen fahrbaren Einrichtungen, die sich nicht kontinuierlich sondern nur gelegentlich an der Maschine befinden, z.B. Transportgeräte für Vorlagematerial.

In der bevorzugten Ausführung wird die Erfindung in einer Anlage nach unserer PCT Patentanmeldung mit der internationalen Veröffentlichungsnummer WO 91/16481 realisiert, d.h. in einer Anlage, worin mindestens eine Maschinensteuerung eine Bedienungsoberfläche aufweist und der Prozessleitrechner diese Bedienungsoberfläche zur Kommunikation mit einem Menschen bzw. mit einem fahrbaren Automaten an dieser Maschine verwenden kann. Durch diese Anordnung kann relativ leicht sichergestellt werden, dass in der gesamten vom Rechner gesteuerten Anlage einem bestimmten Signal eine eindeutige Bedeutung zugeordnet wird. Dies kann einem System gegenübergestellt werden, wonach die Bedienungsunterstützung über ein von den Maschinensteurungen unabhängiges System erfolgt, z.B. nach US 4194349. Die Vorteile der Kombination nach dieser Erfindung sind besonders ausgeprägt, wenn ein Prozessleitrechner sowohl die Bedienungsunterstützung als auch die Steuerung der Maschinen beeinflusst, z.B. in einem Doff-Management-System für Ringspinnmaschinen, ähnlich einem System nach US 4665686.

Die Bedienungsunterstützung über die Bedienungsoberfläche an der zutreffenden Maschine stellt natürlich auch sicher, dass die Hilfe da angeboten wird, wo sie notwendig ist. Dies erlaubt auch eine Vereinfachung des Alarm- bzw. Rufsystems, da die Bedienung jetzt im Prinzip nur an die betroffene Maschine geleitet werden muss, ohne vorher genau über die notwendige Handlung informiert zu werden. Das Alarm- bzw. Rufsystem muss natürlich noch absichern, dass die Bedienung über die Dringlichkeit bzw. die Priorität des Bedienungsrufes informiert wird bzw. dass die richtige Bedienungshilfe bzw. Bedienungsperson (Doffhilfe, Wartung, Fadenbruchbehebung usw.) an die betroffene Maschine gerufen wird.

Ueber die Bedienungsoberfläche kann eine Instruktion an die Bedienungsperson erteilt werden, eine Handlung zu tätigen, welche von der Maschinensteuerung selbst nicht ausgeführt werden kann, z.B. weil die dazu notwendige Aktorik in der zutreffenden Maschine nicht vorhanden ist bzw. nicht unter der Kontrolle der Maschinensteuerung steht. Ein Beispiel einer solcher Handlung (nämlich die Stilllegung einer schlecht arbeitenden Spinnstelle, wo die Maschinensteuerung nicht direkt in die Spinnstellen eingreifen kann) ist in unserer CH Patentanmeldung Nr. 697/91-2 vom 07.03.1991 (Obj. 2211) beschrieben.

Die Bedienungsperson ist auch vorzugsweise in der Lage (oder ist sogar "gezwungen"), die Erzeugung eines Signals zu verursachen, welche die Ausführung der Instruktion darstellt und dies an die Maschinensteuerung bzw. den Prozessleitrechner mitteilt.

Die bevorzugte Anlage nach dieser Erfindung ist mit einer Sensorik versehen, welche den Betrieb der Anlage auch ohne die Prozessleitsignale des Prozessleitrechners gewährleistet. Nach dieser bevorzugten Anordnung ist die Anlage als "konventionell" betreibbare Anlage gestaltet, d.h. sie ist auf der Maschinenebene mit einer derartigen Sensorik und mit derartigen, mit dieser Sensorik verbundenen Maschinensteuerungen versehen, dass die Anlage auch ohne den Prozessleitrechner vollständig betriebsfähig ist.

Die vom betriebsbereiten Prozessleitrechner erzeugten Leitsignale wirken dann optimierend auf die sonst betriebsfähige Anlage, wobei die Maschinensteuerungen der Anlage anhand der Signale von der mit ihren verbundenen Sensorik in der Lage sind, die Plausibilität der Leitsignale jederzeit zu prüfen. Eine Maschinensteuerung führt nur dann einen Steuerbefehl des Prozessleitrechners aus, wenn die Plausibilitätskontrolle keinen Widerspruch zwischen dem Leitsignal (Steuerbefehl) des Prozessleitrechners und den von der Sensorik festgestellten Zustand der Anlage aufdeckt. Andernfalls löst die Maschinensteuerung ein Alarmsignal aus. Die "Steuerbefehle" des Prozessleitrechners sind normalerweise in der Form von Sollwerten erzeugt.

Die Anlage ("Maschinenkette") ist "konventionell" betreibbar in dem Sinn, dass heute schon bekannte Steuerungen und Sensorik ausreichen, um die Anlage ohne den Prozessleitrechner zu betreiben. Diese heutzutage bekannten Steuerungen können natürlich noch verbessert werden, sind aber noch als "konventionell" zu betrachten, solange sie in der Lage sind, die Anlage ohne den Prozessleitrechner betriebsfähig aufrecht zu erhalten. Beim Ausfall des Prozessleitrechners müssen bzw. können allenfalls gewisse Funktionen des Prozessleitrechners von der Bedienperson übernommen werden. In diesem Fall muss die Möglichkeit des menschlichen Eingriffes in der "konventionellen" Anlagesteuerung vorgesehen werden. Es ist aber auch aus anderen Gründen wünschenswert, die Möglichkeit von einzelnen Eingriffen der Bedienungsperson in den Prozessabläufen der Anlage vorzusehen, auch dann, wenn die Anlage als ganze vom Prozessleitrechner gesteuert bzw. geregelt wird.

In einer Anlage, wo alle oder mindestens die kritischen Maschinensteuerungen nach diesem zweiten Aspekt der Erfindung gebildet sind, ist es jederzeit der Bedienungsperson (über das "Bedienungsmittel") möglich, in die Prozessabläufe der Anlage einzugreifen, ob der Prozessleitrechner betriebsfähig ist oder nicht. Weiterhin ist es der Bedienungsperson möglich, jede einzelne Maschine oder mindestens gewisse Maschinen vom Prozessleitrechner zu isolieren und dann z.B. Versuche, Wartungsarbeiten oder Aenderungen an dieser ausgewählten Maschine durchzuführen.
- Fig. 1: schematisch die Verteilung der Wertschöpfung in einer Ringspinnerei für gekämmte Baumwolle,
- Fig. 2: schematisch den Personalbedarf in den Prozess-Stufen,
- Fig. 3: schematisch die Funktionen der Prozess-Steuerung in der Spinnerei (zeigt Datenform und zeitlichen Anfall der Signale),
- Fig. 4: schematisch die Einführung der Prozess-Informatik in der Spinnerei,
- Fig. 5: schematisch die Anforderungen an die Datenübertragung,
- Fig. 6: ein Layout-Diagramm einer Spinnerei bis zum Spinnen (ohne Umspulen),
- Fig. 7: eine Zusammenfassung des Diagramms der Fig. 6,
- Fig. 8: eine Rechner-Anordnung für eine Prozess-Steuerung in einer Anlage nach Fig. 7,
- Fig. 9: schematisch die Vernetzung von Maschinen, Bedienungsrobotern und Transportsystemen,
- Fig. 10: eine diagrammatische Darstellung der Verbindung zwischen einer Maschinensteuerung und einer Spinnstelle,
- Fig. 11: eine diagrammatische Darstellung der Verbindung zwischen einer Maschinensteuerung und einer Spulstelle,
- Fig. 12: schematisch eine mögliche Architektur einer Prozess-Steuerung,
- Fig. 13: eine Modifikation der Architektur nach Fig. 12,
- Fig. 14: weitere Modifikationen der Architektur nach Fig. 12,
- Fig. 15: eine Aufstellung von Begriffen, Standards und Zuständen, die für die Prozess-Steuerung von Bedeutung sind.
- Fig. 16: einen schematischen Querschnitt durch eine Ringspinnmaschine mit einigen Hilfsgeräten,
- Fig. 17: ein schematisches Layout eines Spinnsaals, das Roboter als Hilfsgeräte umfasst,
- Fig. 18: eine schematische Darstellung einer in der Maschine eingebauten Transporteinrichtung,
- Fig. 19: eine Modifikation der Anordnung nach Fig. 14.
- Fig. 20 und 21: (schematisch) verschiedene graphische Darstellungen von wichtigen Beziehungen, die mittels dieses Systems zur Verügung gestellt werden können, und
- Fig. 22: (schematisch) die sogenannte Drehzahlkurve der Ringspinnmaschine

Die Problematik der Prozessführung (ob automatisch oder durch menschliche Bedienung) in der Spinnerei liegt zum Teil in der "Aufsplitterung" des Materialflusses zwischen dem Eingang in der Prozesslinie und der Uebergabe an die Garnlager bzw. an die Weiterverarbeitung in der Weberei oder Strickerei. Dies soll nachfolgend verdeutlicht werden, bevor die Anwendung der Prinzipien nach dieser Erfindung erläutert wird. Die hier aufgeführte Anlage ist konventionell und schon in PCT Patentanmeldung Nr. PCT/CH/91/00140 gezeigt worden; sie dient bloss als Beispiel.

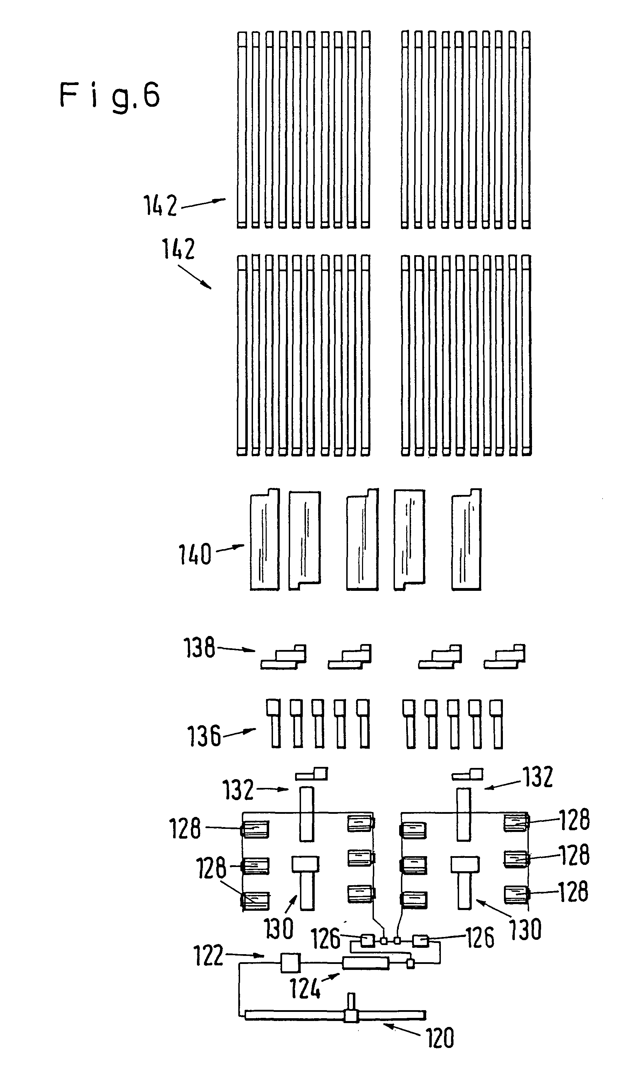

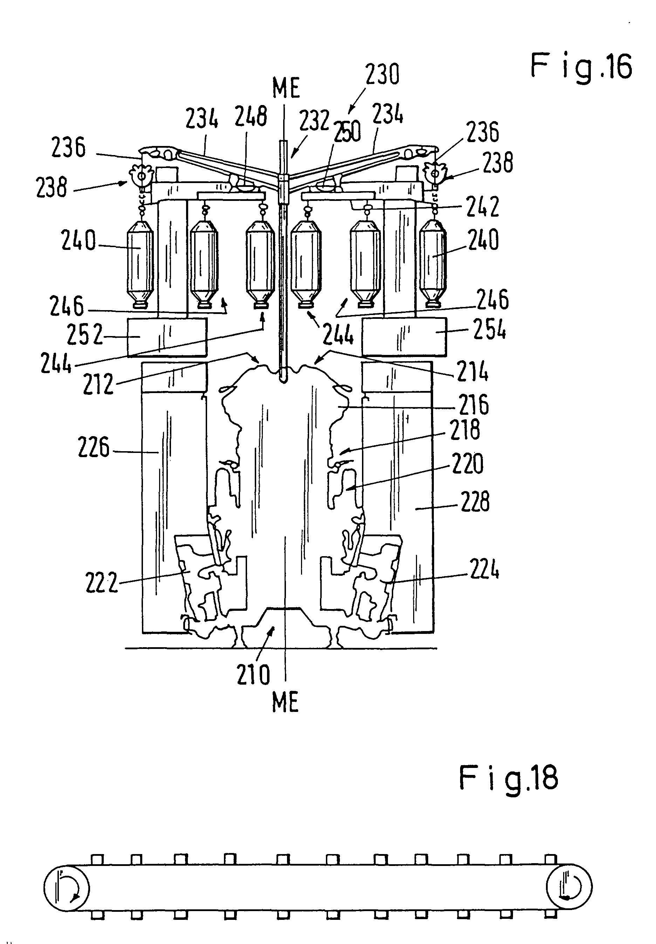

Die in Fig. 6 dargestellte Spinnerei umfasst einen Ballenöffner 120, eine Grobreinigungsmaschine 122, eine Mischmaschine 124, zwei Feinreinigungsmaschinen 126, zwölf Karden 128, zwei Strecken 130 (erste Streckenpassage), zwei Kämmereivorbereitungs-Maschinen 132, zehn Kämmaschinen 136, vier Strecken 138 (zweite Streckenpassage), fünf Flyer 140 und vierzig Ringspinnmaschinen 142. Jede Ringspinnmaschine 142 umfasst eine grosse Anzahl Spinnstellen (bis zu ca. 1200 Spinnstellen pro Maschine). Dies wird nachfolgend näher in Zusammenhang mit Fig. 16 erklärt.

Fig. 6 zeigt eine heute konventionelle Anordnung zur Herstellung von einem sogenannten gekämmten Ringgarn. Das Ringspinnverfahren kann durch ein neueres Spinnverfahren (z.B. das Rotorspinnen) ersetzt werden, wobei die Flyer dann überflüssig werden. Da aber die Prinzipien dieser Erfindung unabhängig von der Art der Endspinnstufe anwendbar sind, reicht die Erklärung in Zusammenhang mit dem konventionellen Ringspinnen auch für die Anwendung der Erfindung in Zusammenhang mit neuen Spinnverfahren. Nicht gezeigt in Fig. 6 ist die Spulerei, die für neue Spinnverfahren (z.B. Rotorspinnen) ohnehin wegfällt.

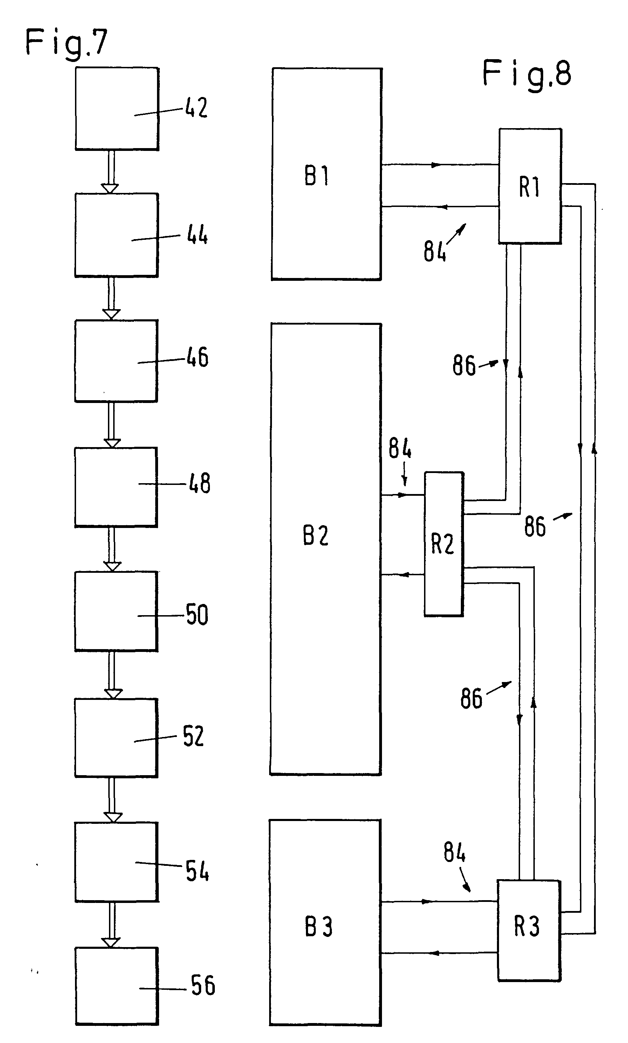

Die Spinnerei nach Fig. 6 ist nochmals in Fig. 7 schematisch dargestellt, wobei im letzteren Fall die Maschinen zu "Verarbeitungsstufen" zusammengefasst worden sind. Gemäss dieser Betrachtungsweise bilden der Ballenöffner 120 und die Grobreinigungsmaschine 122, Mischmaschine 124 und Feinreinigungsmaschinen 126 zusammen eine sogenannte Putzerei 42, welche die Karderie 44 mit weitgehend geöffnetem und gereinigtem Fasermaterial beliefert. Innerhalb der Putzerei wird das Fasermaterial in einem pneumatischen Transportsystem (Luftstrom) von Maschine zu Maschine befördert, welches System in der Karderie einen Abschluss findet. Die Karden 128 liefern je ein Band als Zwischenprodukt, welches in einem geeigneten Behälter (einer sogenannten "Kanne") abgelegt und weiterbefördert werden muss.

Die erste Streckenpassage (durch die Strecken 130) und die zweite Streckenpassage (durch die Strecken 136) bilden je eine Verarbeitungsstufe 46 bzw. 52 (Fig. 7). Dazwischen bilden die Kämmereivorbereitungsmaschinen 132 eine Verarbeitungsstufe 48 (Fig. 7) und die Kämmaschinen 134 eine Verarbeitungsstufe 50 (Fig. 7). Schliesslich bilden die Flyer 138 eine Spinnvorbereitungsstufe 54 (Fig. 7) und die Ringspinnmaschinen 140 eine Endspinnstufe 56 (Fig. 7).

In unserer deutschen Patentanmeldung Nr. 39 24 779 vom 26.06.1989 beschreiben wir ein Prozessleitsystem, wonach eine Spinnerei in "Bereichen" organisiert ist und Signale aus einem Bereich zur Steuerung bzw. Regelung von vorangehenden Bereichen ausgenützt werden können. Ein Beispiel für eine solche Anlage ist in Fig. 8 schematisch gezeigt, wobei die Anlage drei Bereiche B1, B2 und B3 umfasst und jeder Bereich einen eigenen Prozessleitrechner R1, R2, R3 zugeordnet ist. Jeder Rechner R1, R2, R3 ist zum Signalaustausch verbunden (in Fig. 8 schematisch durch die Verbindungen 86 angedeutet). Es wird dem Fachmann klar sein, dass die Darstellung der Fig. 8 rein schematisch ist. Es kann natürlich ein einziger Prozessleitrechner vorgesehen werden, welcher mit allen Bereichen der Spinnereianlage verbunden ist und den gewünschten Signalaustausch zwischen diesen Bereichen durchführt. Es könnten auch weitere "Bereiche" definiert werden. z.B. nach dem Artikel "Integrierte Prozessdatenverarbeitung mit USTER MILLDATA" von H.P. Erni (Reutlinger Spinnerei Kolloquium, 2/3 Dezember 1987). Die gezeigte Ausführung mit einem Prozessrechner R pro Bereich B stellt aber eine sinnvolle Ausführung dar, welche für diese Erklärung angenommen wird.

Der Bereich B1 umfasst die Putzerei 42 und die Karderie 44 (Fig. 7).

Der Bereich B2 umfasst sowohl die beiden Streckenpassagen 146, 152 (Fig. 7) als auch die Kämmereivorbereitungsstufe 148 und die Kämmerei 150.

Der Bereich B3 umfasst die Flyer 154 und die Endspinnstufe 156 (Fig. 7), allenfalls auch eine Spulerei.

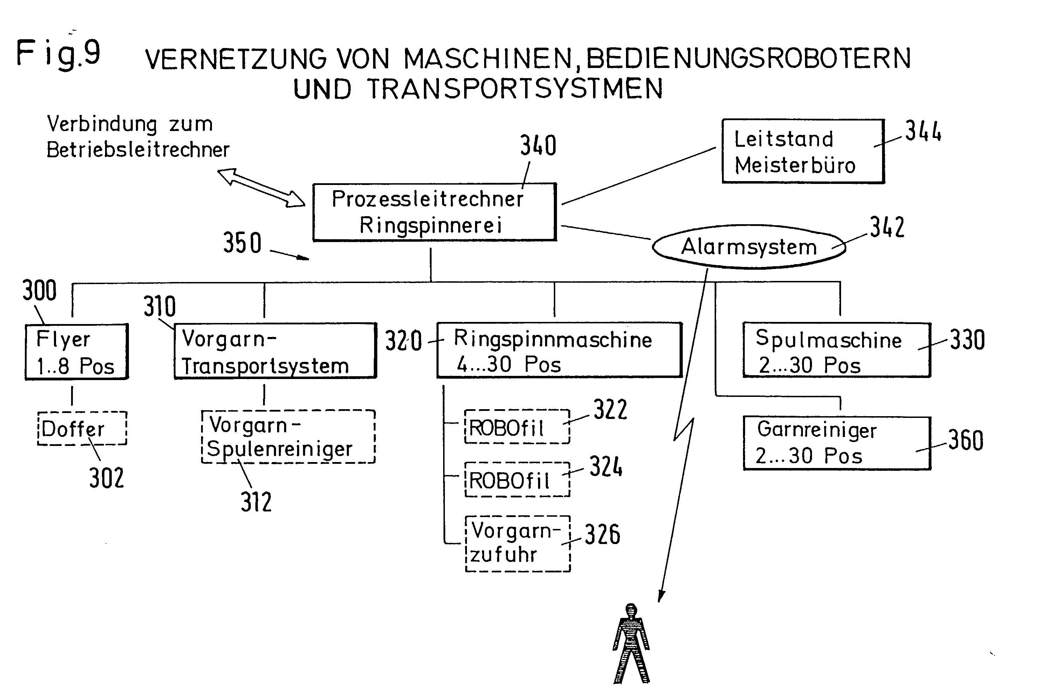

Die Anpassung der Anlagen nach den Figuren 6 bis 8 an die in Zusammenhang mit den Figuren 1 bis 5 erläuterten Prinzipien wird nachfolgend anhand der Figuren 9 bis 14 näher erklärt. Der Bereich B3 (Fig. 8) dient hier als Beispiel.

Eine praktische Ausführung des Bereiches B3 für eine automatisierte Anlage ist in Fig. 9 gezeigt, allerdings immer noch schematisch, um die Informatik-Aspekte des Systems darzustellen. Der dargestellte Anlageteil umfasst (in der Reihenfolge der Prozessstufen, d.h. der "Verkettung" der Maschinen):
a) die Flyerstufe 300,
b) eine Endspinnstufe 320, in diesem Fall durch Ringspinnmaschinen gebildet,
c) ein Vorgarntransportsystem 310, um Flyerspulen von der Flyerstufe 300 an die Endspinnstufe 320 und leere Hülsen von der Endspinnstufe 320 zurück an die Flyerstufe 300 zu tragen, und
d) eine Umspulstufe 330, um die an den Ringspinnmaschinen gebildeten Kopse in grösseren (zylindrischen oder konischen) Packungen umzuwandeln.

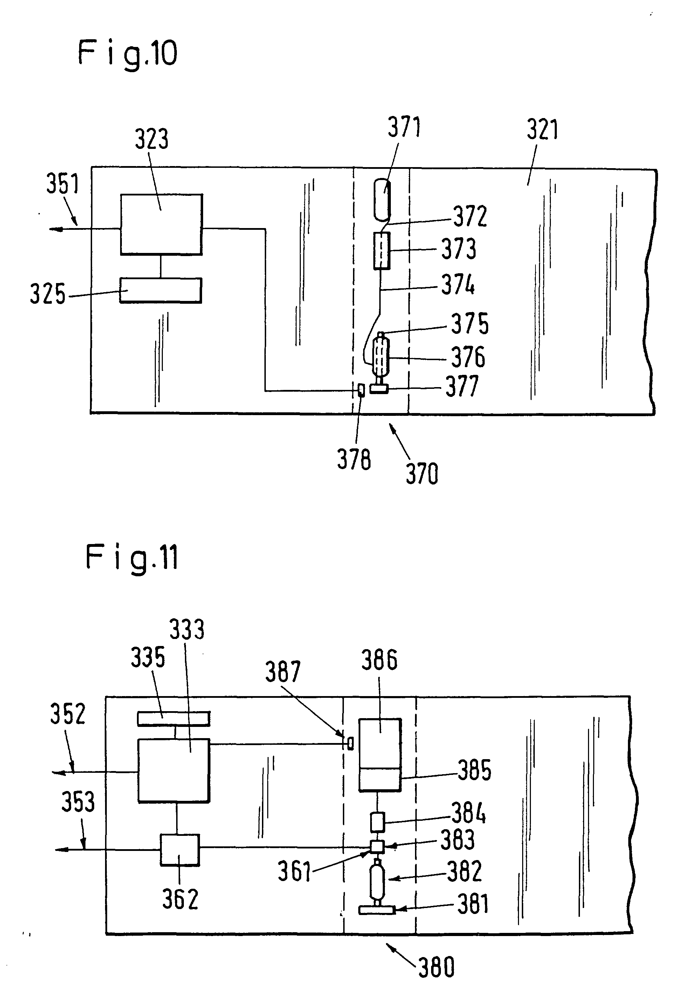

Jede Verarbeitungsstufe 300, 320, 330 umfasst eine Mehrzahl von Hauptarbeitseinheiten (Maschinen), die je mit einer eigenen Steuerung versehen sind. Diese Steuerung ist in Fig. 9 nicht gezeigt, wird aber nachfolgend in Zusammenhang mit Fig. 10 etwas näher erläutert. An der jeweiligen Maschinensteuerung angehängt, sind Robotikeinheiten (Bedienungsautomaten), die dieser Maschine direkt zugeteilt werden. In Fig. 9 ist für jeden Flyer der Stufe 300 ein eigener Doffer vorgesehen - die Funktion "Flyerdoffen" ist in Fig. 9 mit den Kasten 302 angedeutet. Eine mögliche Ausführung ist z.B. in EP-360 149 bzw. in DE-OS-3 702 265 gezeigt.

In Fig. 9 sind auch für jede Ringspinnmaschine der Stufe 320 ein Bedienungsautomat pro Spinnstellenreihe zur Bedienung der Spinnstellen und eine Aufsteckungsbedienung für die Vorgarnzufuhr vorgesehen. Die Funktion "Spinnstellenbedienung" ist mit den Kasten 322, 324 (ein Kasten pro Spinnstellenreihe) und die Funktion "Vorgarnzufuhr" mit den Kasten 326 angedeutet. Eine mögliche Ausführung ist z.B. in EP-41 99 68 oder PCT Patentanmeldung Nr. PCT/CH/91/00225 vom 02.11.1991 gezeigt.

Das Vorgarntransportsystem 310 ist auch mit einer eigenen Steuerung versehen, die hier nicht näher erläutert werden soll. Das System 310 umfasst eine Einheit zum Reinigen von Vorgarnspulen, bevor sie an die Flyerstufe 300 zurückgegeben werden. In Fig. 9 ist die Funktion "Vorgarnspulenreiniger" durch den Kasten 312 angedeutet. Eine mögliche Ausführung dieses Anlageteiles ist in EP-43 12 68 (und zum Teil in EP-39 24 82) gezeigt.

Die Ringspinnmaschinen der Stufe 320 und Spulmaschinen der Stufe 330 bilden zusammen einen "Maschinenverbund", wodurch der Transport der Kopse an die Spulmaschinen gewährleistet ist. Die Steuerung dieses Verbundes erfolgt von der Spulmaschine aus.

Ein Netz 350 ist vorgesehen, wodurch alle Maschinen der Stufen 300, 320, 330 und das System 310 für den Signalaustausch (Datenübermittlung) mit einem Prozessleitrechner 340 verbunden sind. Der Rechner 340 bedient direkt ein Alarmsystem 342 und eine Bedienung 344 z.B. in einer Leitstelle bzw. in einem Meisterbüro.

Eine sehr wichtige Funktion des Umspulens von Ringspinngarn ist die sogenannte Garnreinigung, die mit dem Kasten 360 angedeutet ist. Der Garnreiniger ist über dem Netz 350 mit dem Prozessleitrechner 340 verbunden. Durch diese Vorrichtung werden Garndefekte eliminiert und gleichzeitig Informationen (Daten) gewonnen, die Rückschlüsse auf die vorangehenden Verfahrensstufen ermöglichen. Die Garnreinigungsfunktion wird an der Spulmaschine ausgeübt.

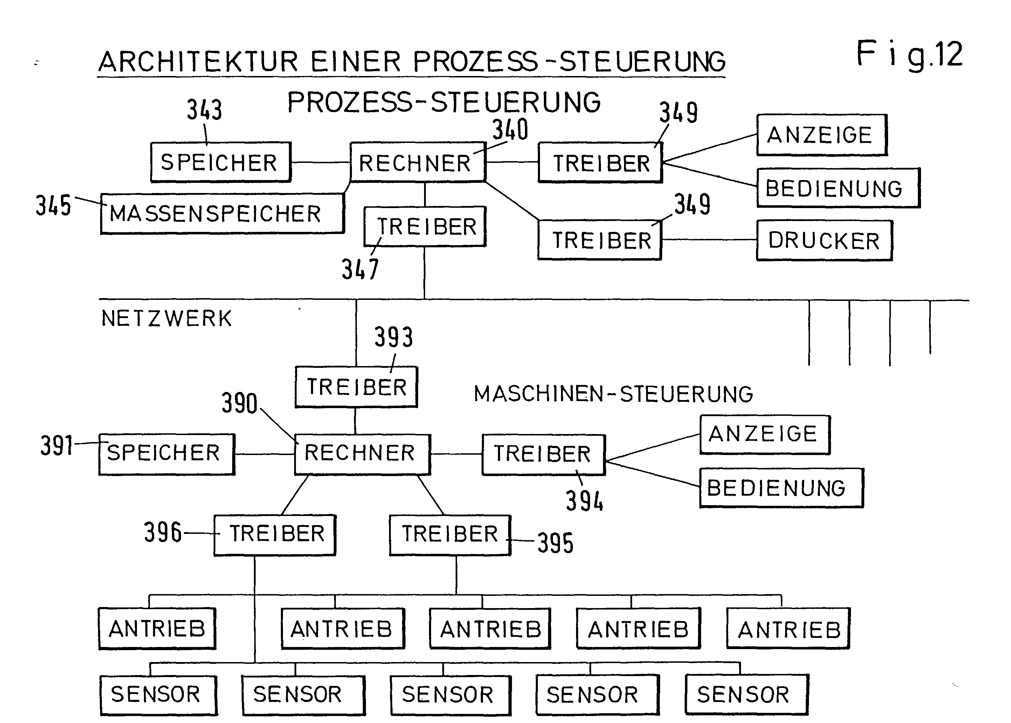

Die Figuren 10 und 11 zeigen etwas detailliertere aber noch schematische Darstellungen einer Ringspinnmaschine 321 (Fig. 10) der Stufe 320 und einer Spulmaschine 331 (Fig. 11) der Stufe 330.

Die Steuerung der Maschine 321 ist schematisch mit 323 und die Steuerung der Maschine 331 mit 333 angedeutet. Für jede Maschine 321, 331 ist eine einzige Arbeitsposition 330 (Fig. 10), 380 (Fig. 11) schematisch angedeutet. Im Fall der Ringspinnmaschine 321 umfasst die Arbeitsstelle 370 eine Aufhängung (nicht gezeigt) in der Aufsteckung (nicht gezeigt) für eine Flyerspule 371, welche Vorgarn 372 an ein Streckwerk 373 liefert. Die aus dem Streckwerk 373 austretenden Fasern werden zu einem Garn 374 gesponnen, das auf einer Hülse 375 zu einem Kops 376 aufgewickelt wird. Die Hülse 375 ist von einer Spindel (nicht gezeigt) getragen, die durch einen, dieser Spindel zugeordneten Antriebsmotor 373 (Einzelspindelantrieb) in Rotation um die eigene Längsachse versetzt wird.

Die Arbeitsstelle 380 der Spulmaschine umfasst eine Zufuhr (nicht gezeigt) für einzelne Kopsträger 381 (z.B. sogenannte "Peg-Trays"), die je einen Kops 382 tragen. Das Garn 383 des Kopses wird abgewickelt und über einen Spleisser 384 an eine Fadenchangierung 385 geliefert. Ein Spulenhalter (nicht gezeigt) trägt eine Hülse (nicht gezeigt) als Kern einer Pakkung 386, die durch die Rotation der Hülse um die eigene (waagrechte) Achse bei einer von der Changierung erzeugten axialen Bewegung des Fadens gebildet wird.

Es wird angenommen, jede Arbeitsstelle 370, 380 sei mit einer eigenen Sensorik versehen. Im Fall der Ringspinnmaschine besteht dies aus einem einfachen Sensor 378 pro Spinnstelle, um festzustellen, ob die Spinnstellen (der Spindelmotoren 377) in Betrieb ist oder nicht. Die Spulstelle 380 kann mit einem entsprechenden Sensor 387 versehen werden. Die Spulstelle 380 ist aber zusätzlich mit einem Garnprüfgerät 361 versehen, welches ein Element des Garnreinigers 360 (Fig. 9) bildet. Das Garnprüfgerät bzw. umfasst einen Garnsensor (nicht separat angedeutet), der vorbestimmte Qualitätsparameter des Garnes überwacht und entsprechende Signale (Daten) an eine Datenerfassungseinheit 362 der Maschine 331 liefert, welche die Daten für alle Spulstellen dieser Maschine zusammenfasst. Die Dateneinheit 362 stellt ein weiteres Element des Garnreinigers 360 dar. Ueber Leitungen 351, 352 und 353 des Netzes 350 (Fig. 9) sind die Steuerungen 323, 333 und die Dateneinheit 362 mit dem Leitrechner 340 (Fig. 9) verbunden. Die Dateneinheit 362 tauscht auch Signale mit der Steuerung 333 der Spulmaschine aus. Die Bedienungsautomaten können auch mit Sensoren versehen werden, z.B. wie in unserem US-Patent 4 944 033 gezeigt ist.

Nach einem Aspekt dieser Erfindung ist die Anlage derart gebildet, dass der Rechner 340 den direkten Zugang zu den "Rohdaten" der Sensorik 378, 387, 361 hat, obwohl die einzelnen Steuerungen 323, 333, 362 in der Abwesenheit eines Steuerungbefehls vom Leitrechner 340 unabhängig von diesem Rechner (teil-autonom) anhand der Ausgangssignale der Sensorik 378, 387, 361 arbeiten. Das heisst, die Rohdaten der Sensorik werden nicht durch die Steuerungen 323, 333 und 362 zu "Berichten" zusammengefasst, die das Informationsgehalt der Sensoriksignale durch "Konzentration" reduzieren und die an den Leitrechner weitergeleitet werden. Stattdessen werden sie (mindestens auf Anfrage des Leitrechners 340) als inhaltlich unveränderte Qualitäts- bzw. Zustandssignale an den Leitrechner weitergegeben. "Rohdaten" (im Sinne der Steuerung) sind grundsätzlich "Istwerte" der Sensorik oder daraus hergeleitete Signale, jedenfalls von der Sensorik stammende Daten.

Jede Maschine 321, 331 ist auch mit einer "Bedienungsoberfläche" 325 bzw. 335 versehen, die mit der jeweiligen Steuerung 323 bzw. 333 verbunden ist und Mensch-Maschine (oder sogar Robot-Maschine) Kommunikation ermöglicht. Die "Bedienungsoberfläche" kann auch als "Bedienungsfeld", oder "Bedienungstableau" oder "Bedienungskonsol" bezeichnet werden. Ein Beispiel einer solchen Bedienungsoberfläche ist in DE-OS-37 34 277 gezeigt, allerdings nicht für eine Ringspinnmaschine, sondern für eine Strecke. Das Prinzip ist für alle solchen Bedienungsmittel gleich. Weitere Beispiele sind im Artikel "Neue Mikrocomputer für die Textilindustrie" von F. Hösel in Melliand Textilberichte vom September 1991 (ITMA Ausgabe) zu finden.

Nach der Erfindung gemäss der PCT Patentanmeldung Nr. WO/91/16481 ist die Anlage derart programmiert und ausgelegt, dass der Leitrechner 340 Bedienungsunterstützung über die Bedienungsoberfläche 325 bzw. 335 der jeweiligen Maschine leisten kann, d.h. der Leitrechner kann Steuerbefehle über dem Netz 350 senden und die Maschinensteuerungen können derartige Steuerbefehle empfangen und befolgen, sodass der Zustand der Bedienungsoberfläche vom Leitrechner 340 über der jeweiligen Steuerung bestimmt wird.

Fig. 12 zeigt eine mögliche Variante der Architektur für eine Prozess-Steuerung nach Fig. 9 bis 11. Fig. 12 zeigt nochmals den Leitrechner 340 und das Netzwerk 350 zusammen mit einem Rechner 390 einer Maschinensteuerung der Anlage (z.B. des Vorgarntransportsystems 310, das zur Erläuterung der Informatik einer "Maschine" gleichgesetzt werden kann). Jeder Rechner 340, 390 hat ihm zugeordnete Speicher 343, 345 bzw. 391 und Treiber 347, 349 bzw. 393, 394, 395, 396.

Die Treiber 349 bzw. 394 bestimmen die notwendigen Schnittstellen für die Kommunikation der Rechner 340, 390 mit ihren jeweiligen Bedienungsoberflächen, hier als Anzeige, Bedienung und Drucker angedeutet. Der Treiber 347 bestimmt die Schnittstelle zwischen dem Leitrechner 340 und dem Netzwerk 350 und der Treiber 393 die Schnittstelle zwischen dem Netzwerk 350 und der Maschinensteuerung 390.

Der Treiber 395 bestimmt die Schnittstellen zwischen der Maschinensteuerung 390 und den dadurch gesteuerten Antriebe (z.B. im Fall der Ringspinnmaschine, Fig. 10, den Spindelantriebsmotoren 377). Der Treiber 396 bestimmt die Schnittstelle zwischen der Maschinensteuerung 390 den ihr zugeordneten Sensorik (z.B. im Fall der Ringspinnmaschine, Fig. 10, den Sensoren 378).

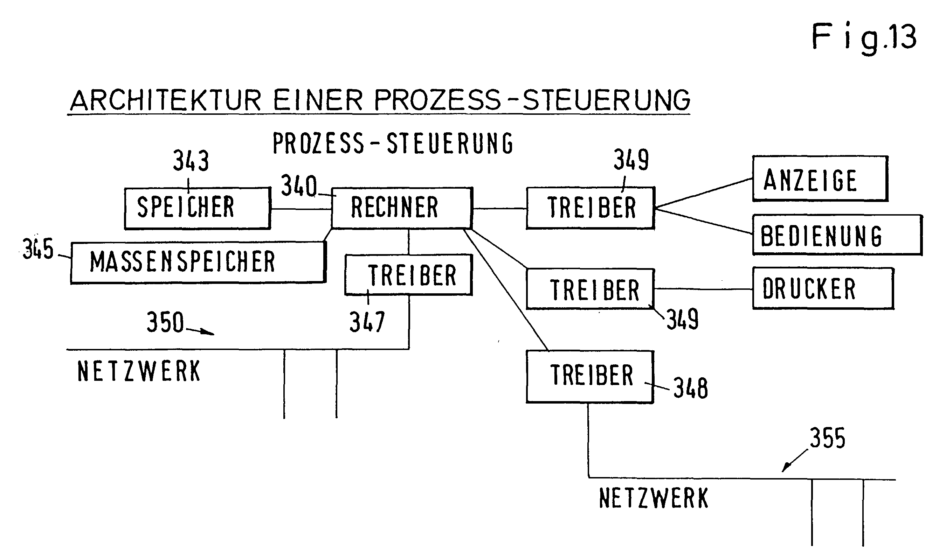

Fig. 13 zeigt nun eine erste Modifikation dieser Architektur. Dem Leitrechner 340 ist nun ein zusätzlicher Treiber 348 zugeordnet, welcher die Schnittstelle zwischen dem Rechner 340 und einem weiteren Netzwerk 355 bestimmt. Die dem Rechner zugeordneten Maschinen (nicht gezeigt) sind nun entweder dem Netzwerk 350 oder dem Netzwerk 355 angehängt. Die Treiber/Netzwerke Kombinationen 347/350 bzw. 348/355 unterscheiden sich darin, dass sie mit unterschiedlichen Maschinensteuerungen kompatibel sind - die Maschinen müssen in Abhängigkeit von ihren Steuerungstypen mit dem einen oder anderen Netzwerk 350 bzw. 355 verbunden werden.

Nur zwei Treiber 347, 348 sind in Fig. 13 gezeigt worden - es können aber offensichtlich noch weitere Netzwerke, jeweils über einen eigenen Treiber, mit dem Leitrechner verbunden werden. Die Verdoppelung bzw. Vervielfachung der Anzahl Netzwerke kann nicht nur zur Ueberwindung von Kompatibilitätsproblemen angewendet werden. Wenn z.B. die Anlage so gross ist, dass Kapazitätsprobleme in Zusammenhang mit einem einzigen Netzwerk 350 entstehen, können solche Probleme durch die Anwendung eines zweiten Netzwerkes vermindert (wenn nicht vollständig gelöst) werden. (vgl. die Bemerkungen in der Einleitung bezüglich der Uebertragungskapazitäten von den heutigen Schnittstellen).

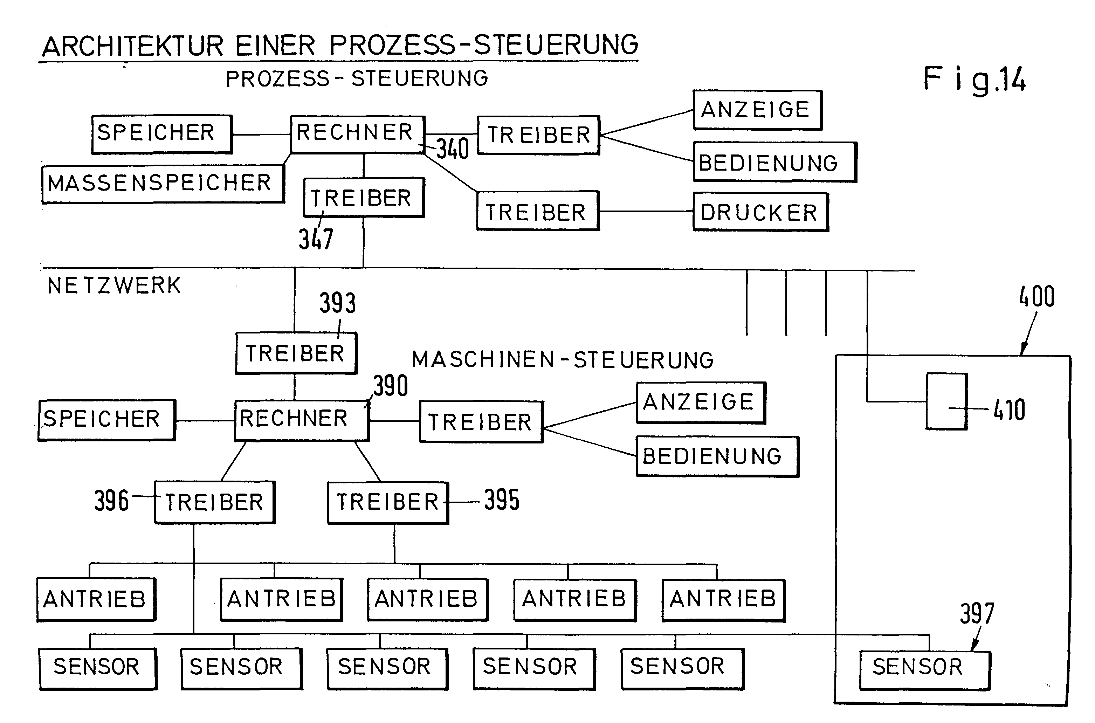

Fig. 14 zeigt eine weitere Modifikation der Anordnung nach Fig. 12, wobei in diesem Fall ein einziges Netzwerk 350 (gezeigt) oder eine Mehrzahl von Netzwerken (nicht gezeigt) zur Anwendung kommen können. Elemente in Fig. 14, die mit Elementen in Fig. 12 identisch sind, tragen in beiden Figuren die gleichen Bezugszeichen.

Fig. 14 zeigt einen weiteren Treiber 410, der als Schnittstelle zwischen dem Netzwerk 350 und der Steuerung einer weiteren Maschine 400 dient. Diese Maschine 400 ist mit derjenigen Maschine verkettet, die durch den Rechner 390 gesteuert wird, z.B. wenn die letztgenannte Maschine eine Mischmaschine ist, kann die Maschine 400 ein Ballenöffner oder eine Kardenspeisung sein. Dem Treiber 396 ist auch ein zusätzlicher Sensor 397 angehängt, welcher nicht in der "eigenen" Maschine, sondern in der nächsten Maschine 400 der "Kette" vorgesehen ist und der Zustand dieser Maschine 400 der "eigenen" Maschinensteuerung (dem Rechner 390) mitteilt. Es kann offensichtlich mehrere solche zusätzliche Sensoren in den anderen oder in verschiedenen anderen Maschinen der Kette vorgesehen werden.

Durch solche "Spionsensoren" ist jede teilautonome Steuerung in der Lage, die ihr vom Rechner 340 gegebenen Befehle grob auf Widersprüche zu überprüfen. Noch wichtiger, die teilautonome Steuerung bleibt auch dann funktionsfähig, wenn das Netzwerk 350 bzw. der Leitrechner 340 ein Defekt aufweist. Die Effizienz der Anlage wird sicher dadurch reduziert; sie bleibt aber trotzdem in (nicht optimalen) Betrieb.

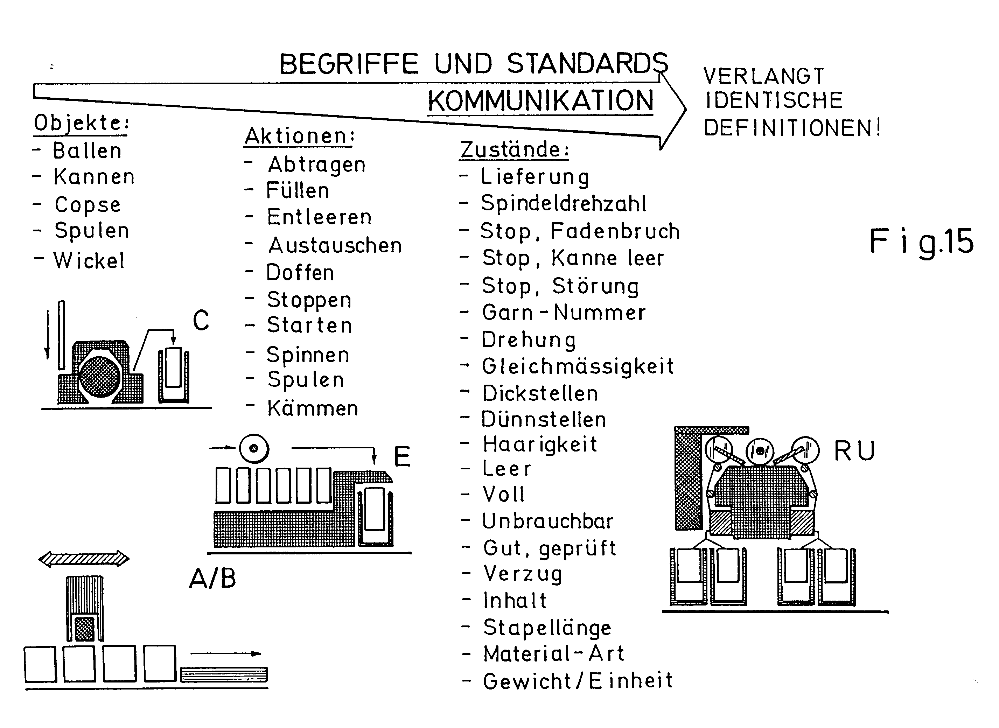

Fig. 15 zeigt schematisch verschiedene Begriffe und Zustände, die für den verbreiteten Einsatz von Prozessleitsystemen standardisiert werden sollten. Diese Zustände sollten auf jeden Fall bei der Festlegung der notwendigen Sensorik berücksichtigt werden. Das Diagramm A/B deutet auf einen Ballenöffner, C auf eine Karde, E auf eine Kämmaschine und RU auf eine Rotorspinnmaschine.

### Die Ringspinnmaschine

Die Ringspinnmaschine dient in dieser Anmeldung als Beispiel einer "Längsteilmaschine". Andere Längsteilmaschinen sind Flyer, die Spinnmaschinen für die neuen Spinnverfahren (Rotorspinnmaschinen, Düsenspinnmaschinen), Spulmaschinen, Zwirnmaschinen (z.B. Doppeldrahtzwirnmaschinen) und Falschdrahttexturiermaschinen zur Verarbeitung von Endlosfilamenten.

Die allgemeinen Prinzipien einer modernen Ringspinnanlage sind im Artikel "Die automatisierte Ringspinnmaschine" von F. Dinkelmann enthalten, das am Reutlinger Spinnerei Kolloquium 2/3 Dezember 1986 vorgetragen wurde.

Die Maschine nach Fig. 16 umfasst ein doppelseitiges Gestell 210 mit zwei Spinnstellenreihen 212 bzw. 214, die spiegelbildlich zu einer Mittelebenen ME der Maschine angeordnet sind. In einer modernen Maschine enthält jede solche Spinnstellenreihe 212, 214 zwischen 500 und 600 dicht aneinandergereihte Spinnstellen. Jede Spinnstelle umfasst ein Streckwerk 216, Fadenführungselemente 218 und eine kopsbildende Einheit 220. Die Einheit 220 enthält einzelne Arbeitselemente, wie z.B. Spindel, Ring und Läufer, die aber für diese Erfindung keine Rolle spielen und nicht einzeln gezeigt sind. Diese Elemente sind dem Fachmann bekannt und sind z.B. aus EP-A 382943 ersichtlich. Für jede Spinnstellenreihe 212 bzw. 214 ist ein Doffautomat 222, 224 vorgesehen, welcher alle Spinnstellen der ihm zugeordneten Spinnstellenreihe gleichzeitig bedient. Dieser Automat wird hier auch nicht näher beschrieben, wobei Einzelheiten aus EP-A 303877 gefunden werden können.

Jede Spinnstellenreihe 212 bzw. 214 ist auch mindestens einem Bedienungsgerät 226 bzw. 228 zugeordnet, welches der jeweiligen Reihe entlang fahrbar ist und Bedienungsoperationen an den einzelnen Spinnstellen ausführen kann. Einzelheiten eines solchen Bedienungsgerätes sind z.B. aus EP-A 388938 zu entnehmen.

Das Gestell 210 trägt ein Gatter 230, das aus senkrechten Stangen 232 und Querträgern 234 gebildet ist. Schienen 236 sind an den äusseren Enden der Querträger 234 montiert und erstrecken sich in Längsrichtung der Maschine. Jede Schiene 236 dient als eine Führungsbahn für einen Trolleyzug 238, der neue Spulen 240 an das Gatter 230 heranführt. Einzelheiten eines solchen Trolleyzuges sind aus EP-43 12 68 zu entnehmen.

Das Gatter 230 umfasst auch Träger 242 für Vorlagespulen 244, 246, welche die einzelnen Spinnstellen mit Vorgarn beliefern. Die Träger 242 sind als Querschienen gezeichnet, wobei aber diese Anordnung für diese Erfindung ohne Bedeutung ist. Im Beispiel nach Fig. 16 sind die Vorlagespulen für jede Spinnstellenreihe 212 bzw. 214 in zwei Reihen angeordnet, und zwar in einer inneren Reihe 244 in der Nähe der Mittelebene ME und einer äusseren Reihe 246, welche von der Mittelebene ME entfernt ist. Für jede Spinnstellenreihe 212 bzw. 214 bildet eine Spule der inneren Reihe 244 und eine benachbarte Spule der äusseren Reihe 246 ein Vorlagespulenpaar, welches ein jeweiliges Paar von benachbarten Spinnstellen mit Vorgarn beliefert. Der Teil eines Gatters, welcher ein Vorlagespulenpaar enthält, kann als "Gatterstelle" bezeichnet werden.

Die Querträger 234 tragen auch auf jeder Maschinenseite eine Schienenanordnung 248 bzw. 250, welche als Führungsbahn für einen jeweiligen fahrbaren Roboter 252 bzw. 254 dient. Der Roboter 252 bzw. 254 läuft daher zwischen der äusseren Vorlagespulenreihe 246 und den vom Trolleyzug 238 getragenen neuen Spulen 240 und oberhalb des jeweiligen Bedienungsgerätes 226 bzw. 228. Der Roboter 252 ist zur Bedienung der beiden Vorlagespulenreihen des Gatters ausgelegt, wie in unserer PCT Patentanmeldung Nr. PCT/CH/91/00225 erklärt wurde. Dieser Roboter ist für das Luntenhandling derart ausgelegt, dass nach einem Spulenwechsel im Gatter die Lunte der neuen Spule durch den Roboter ins Streckwerk eingefädelt wird.

### Transporteinrichtungen

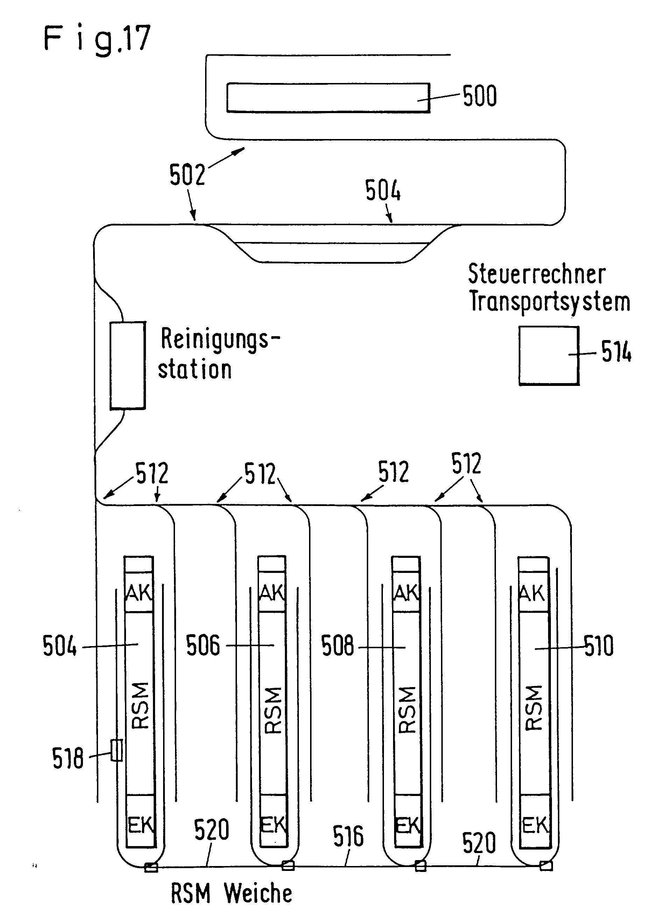

Fig. 17 zeigt ein Beispiel für das Layout des Spinnsaals einer Ringspinnanlage, die durch einen Roboter nach PCT-Patentanmeldung Nr. PCT/CH/91/00225 bedient wird. Das Diagramm der Fig. 17 soll insbesondere zur Erklärung der Belieferung der Spinnmaschinen mit zu verarbeitendem Vorlagematerial dienen. Ein Flyer 500 liefert über ein Schienennetz 302 (mit Pufferstrecken 504) für Trolleys (nicht gezeigt) Spulen an vier Ringspinnmaschinen 504,506,508 und 510. Mit AK bzw. EK ist für jede Maschine der Antriebskopf bzw. der Endkopf (vom Antriebskopf entfernt) angedeutet. Ueber Weichenstellen 512 kann ein Trolley auf einer beliebigen Maschinenseite geführt werden. Jeder Maschine ist dementsprechend ein U-förmiger Abschnitt des Netzes zugeteilt. Die Transporteinrichtung ist von einem Zentralrechner 514 des Transportsystems gesteuert. Ein Beispiel für den Aufbau eines Transportnetzes zwischen Flyern und Ringspinnmaschinen ist in der europäischen Patentanmeldung Nr. 43 12 68 zu finden.

Es ist auch ein Schienennetz 516 für den Spulenwechsel- bzw. Luntenhandling-Roboter 518 vorgesehen, der dem Roboter 252,254 nach Fig. 16 entspricht. Das Netz 516 umfasst für jede Maschine einen jeweiligen U-förmigen Abschnitt, der aber dem entsprechenden U-förmigen Abschnitt des Transportnetzes 502 entgegengerichtet ist. Ueber Verbindungsstücke 520 kann der Roboter 518 von einer Maschine zu einer anderen geführt werden.

Spulenwechseloperationen werden vorzugsweise nach einer vorbestimmten "Wechselstrategie" ausgeführt, wovon ein Beispiel in PCT Patentanmeldung Nr. PCT/CH/91/00225 beschrieben ist. Nach dieser Strategie werden die Wechseloperationen abwechselnd auf der einen bzw. der anderen Seite der Maschine durchgeführt, um die Arbeitsbelastung der Bedienungsgeräte 226,228 (Fig. 16) zu verringern. Es ist nämlich notwendig, beim Neueinfädeln des Streckwerkes jedesmal eine Spulenwechseloperation mit einer Fadenbruchbehebung zu koordinieren, so dass beim Spulenwechsel das Bedienungsgerät 226 bzw. 228 stets bei den betroffenen Spinnstellen vorhänden sein sollte. Dies bedeutet natürlich, dass das Bedienungsgerät zur Bedienung von anderen Spinnstellen nicht zur Verfügung steht, obwohl allenfalls andere Störungen (die eine Fadenbruchbehebung erfordern) an diesen anderen Spinnstellen vorkommen.

Die bevorzugte Maschinenanordnung umfasst daher mindestens zwei Bedienungsgeräte (Fig. 16), die je einer Maschinenseite zugeordnet sind. Während ein Bedienungsgerät daher zur Mitarbeit bei einer Spulenwechseloperation auf der einen Maschinenseite abgeordnet werden kann, ist das Bedienungsgerät auf der anderen Maschinenseite freigestellt, die Spinnstellen zu bedienen, die keine Spulenwechseloperation erfordern.

Die Anforderung (in der Form eines Signals) zum Heranführen eines voll beladenen Trolleyzuges aus der Transporteinrichtung an eine bestimmte Ringspinnmaschine wird vorzugsweise von dieser Maschine selbst (zum Beispiel gemäss EP-392482) erzeugt. Das Positionieren dieses Trolleyzuges gegenüber der Ringspinnmaschine hängt aber dann von der Gesamtanordnung ab. Es könnte zum Beispiel vorgesehen werden, dass eine gesamte Maschinenseite jedesmal mit Trolleyzügen besetzt wird, wonach Spulenwechseloperationen durch den Roboter durchgeführt werden. Die Informationen bezüglich der Gatterstellen, welche aus diesen Trolleys zu besetzen sind, sollten in der Ringspinnmaschine bzw. im Roboter (eher als in der Zentralsteuerung 514 der Transporteinrichtung) vorhanden sein.

Im wahrscheinlicheren Fall, dass der Trolleyzug kürzer als die Gesamtlänge der Maschine ist, und, dass die Spulenwechseloperationen gruppenweise erfolgen, muss jeder Trolleyzug in einer geeigneten Position gegenüber der Ringspinnmaschine gestellt und verriegelt werden. In diesem Fall ist vorzugsweise eine Schnittstelle zwischen der Steuerung 514 der Transporteinrichtung und der Steuerung der Ringspinnmaschine zu definieren, so dass die Bewegungen des Trolleyzuges ab dieser Schnittstelle von der Ringspinnmaschinensteuerung übernommen werden (z.B. nach EP 392482). Die geeigneten Positionsinformationen können entweder vom Roboter an die Ringspinnmaschine abgegeben werden oder sie können in der Ringspinnmaschinensteuerung vorhanden sein und an den Roboter übertragen werden.

Das Auslösen einer Spulenwechseloperation kann von der Ringspinnmaschine entweder nach Zeit oder (vorzugsweise) gemäss der abgelieferten Luntenmenge (d.h. in Abhängigkeit von der Maschinengeschwindigkeit) gerechnet werden.

Ob die Anordnung nach Fig. 17 (mit einer Verbindung für den Roboter zwischen zwei oder mehr, (in Fig. 17 vier), Maschinen möglich ist oder nicht, hängt von der Spulenwechselhäufigkeit ab, was wiederum von der Garnnummer abhängig ist. Falls die Verbindung möglich ist, sollte der Uebergang von einer Maschine zu einer anderen durch die Zentralsteuerung 514 der Transporteinrichtung in Abhängigkeit von der Belieferung der Maschinen mit Trolleys koordiniert werden.

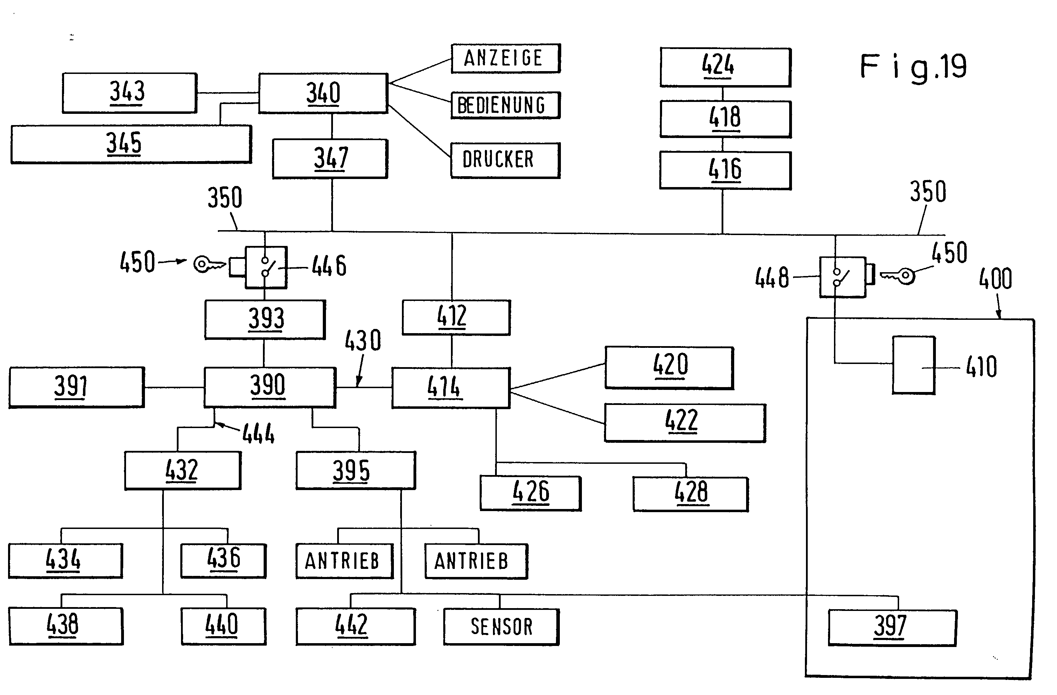

Eine Spinnmaschine braucht aber eine Transporteinrichtung nicht nur für die Zufuhr des Vorlagematerials sondern auch zum Weiterbefördern des Produktes der Spinnmaschine selbst. Die meisten modernen Ringspinnmaschinen sind heute mit zwei Transportbändern nach Fig. 18 ausgerüstet. Jeder Spindelreihe ist ein eigenes mit Zapfen versehenes Band zugeordnet. Die Leerhülsen werden auf je einen Zapfen durch die Bewegung des Bandes in der Längsrichtung der Maschine dem Doffautomat und dadurch den Spinnstellen zugeführt - die gleichen oder anderen am Band befestigten Zapfen dienen der Abfuhr der vollen Kopse, nachdem sie durch den Doffautomat den Spindeln abgenommen werden. Beispiele solcher Systeme sind in US 3791123; CH 653378 und EP 366048 zu finden. Neuere Systeme, die auf der Basis des sogenannten Peg Trays beruhen, sind z.B. aus der europäischen Patentanameldung Nr. 45 03 79 zu entnehmen.

Die Spinnmaschinen nach neueren Verfahren brauchen andere Transporteinrichtungen, z.B. zum Befördern von Kannen an die bzw. zum Weiterbefördern von Kreuzspulen von der Rotorspinnmaschine. Beispiele solcher Systeme sind in DE 4015938.8 vom 18.05.1990 (Kannenzufuhr) bzw. DOS 4011298 (Kreuzspulentransportsystem) zu finden.

### Die Aktorik der (Ring-) Spinnmaschine

Die Aktorik der Maschine umfasst sowohl die ein- wie auch die angebauten Elemente und Aggregate. Die Aktorik für die eingebauten Elemente umfasst mindestens Antriebe für die Spindeln, die Streckwerke und Ringbank. Ein modern konzipiertes System (Einzelantrieb) zum Antreiben der Spindeln, Ringbank und Streckwerke einer Ringspinrimaschine ist in EP 349831 und 392255 gezeigt, wonach für jede Spindel und auch für einzelne Streckwerkreihen je ein eigener Antriebsmotor vorgesehen ist. Das heute noch am meisten gebrauchte Antriebssystem (Zentralantrieb) für die Ringspinnmaschine umfasst einen Hauptmotor im Antriebskopf der Maschine und Uebertragungsmittel (z.B. Längswellen, Riemen bzw. Zahnräder), um die Antriebskräfte vom Hauptmotor auf die Antriebselemente zu übertragen.

In einer Maschine nach Fig. 16 muss auf jeden Fall je ein Zusatzmotor für die Doffvorrichtungen 222,224 vorgesehen werden. Die Aktorik für die eingebauten Elemente umfasst auch die Antriebe der Transporteinrichtungen für Kopse (z.B. nach DOS 3610838) oder für Leerhülsen in der Aufsteckung (z.B. nach WO 90/12133).

Die angebauten Hilfsaggregate umfassen natürlich sowohl die Roboter 226,228 und 252,254 als auch Transporttrolleys 238, die vorläufig an der Maschine positioniert sind. Weitere Beispiele solcher Aggregate sind Reinigungsroboter, Bläser oder andere fahrbare Automaten z.B. für den Läuferwechsel.

Einige dieser Aggregate haben eigenen Antriebe (fahrbare Bedienungsautomaten). Andere haben möglicherweise keinen eigenen Antrieb sondern sind von einem der Maschine an- bzw. eingebauten Antrieb abhängig (siehe z.B. den Trolleyantrieb gemäss Fig. 16 bis 18 von WO 90/12133) bzw. einem Antrieb nach der europäischen Patentanmeldung Nr. 42 11 77. Die Antriebe dieser Hilfsaggregate sind auch als die Aktorik der Spinnmaschine zu betrachten, sofern sie von der Maschinensteuerung beeinflussbar sind.

Wichtige Aktorikelemente sind diejenigen, welche zum "Stilllegen" einer Spinnstelle dienen, wobei "Stillegen" hier "als effektiv produzierende Spinnstelle stillegen" zu verstehen ist. In den meisten Fällen werden nämlich beim Stillegen einer einzelnen Spinnstelle nicht alle Arbeitselemente dieser Spinnstelle zum Stillstand gebracht, sondern das Spinnen wird in dieser Spinnstelle unterbrochen. Dies kann zum Beispiel durch Abbrechen der Materialzufuhr und/oder durch das absichtliche Erzeugen eines Fadenbruches geschehen.

In einer weitgehend automatisierten Maschine (z.B. der Rotorspinnmaschine) kann dies problemlos von einer zentralen Maschinensteuerung aus durch die eine oder die andere Möglichkeit bewerkstelligt werden. Es kann z.B. der Antrieb an die Speisewalze unterbrochen werden, um die Materialzufuhr an die Auflösewalze bzw. den Rotor der Spinnstelle zu unterbinden. Es kann aber auch ein sogenannter Qualitätsschnitt in der Qualitätsüberwachung der Spinnstelle bzw. Spulstelle durchgeführt werden, um den Fadenlauf zu unterbrechen. In der Rotorspinnmaschine oder Düsenspinnmaschine kann ein solcher "Schnitt" durch die absichtliche Unterbrechung des Zufuhrmaterials verursacht werden.

In der heutigen konventionellen Ringspinnmaschine sind solche Möglichkeiten nicht vorhanden, da die Aktorik der einzelnen Spinnstellen nicht unter der direkten Kontrolle der zentralen Maschinensteuerung steht. In solchen Maschinen kann aber die Stillegung einer Spinnstelle durch ein fahrbares Hilfsaggregat bewerkstelligt werden, z.B. nach dem System der schweizerischen Patentanmeldung Nr. 697/91 vom 07.03.1991, d.h. durch die Betätigung einer Luntenklemme, um die Materialzufuhr zu unterbinden.

Die Ausnützung einer Luntenklemme zum Unterbrechen der Materialzufuhr wird bei allen Maschinentypen wichtig sein, wo das Vorlagematerial über ein Streckwerk an die Spinnelemente geliefert wird, weil normalerweise das Abstellen einer einzelnen Position eines Streckwerks unmöglich ist. Den Luntenklemme der einzelnen Spinnstellen können natürlich auch je eine Betätigungsvorrichtung zugeordnet werden. Diese sind dann auch von einer zentralen Maschinensteuerung aus betätigbar. Beispiele solcher Luntenklemmen sind in EP 322636 und EP 353575 zu finden.

### Die Steuerung der Spinnmaschine und ihre Hilfsaggregate

Die heute konventionelle Ringspinnmaschine (mit Zentralantrieb) hat normalerweise eine zentrale Mikroprozessorsteuerung, die geeignete Steuersignale für das Zentralantriebssystem (normalerweise durch Ansteuerung von Frequenzumrichter) erzeugt. Ein Einzelantriebssystem kann z.B. eine "verteilte" Steuerung nach EPO 389849 umfassen. Neuartige Spinnmaschinen (Rotor- bzw. Luftspinnmaschinen) sind auf jeden Fall mit verteilten Steuerungen versehen - siehe z.B. EP 295406 oder den Artikel "Mikroelektronik - heutige und zukünftige Einsatzgebiete in Spinnereibetrieben" in Melliand Textilberichte 6/1985, Seite 401 bis 407, wobei die verteilten Steuerungen sinnvollerweise eine zentrale koordinierende Maschinensteuerungszentrale umfassen. Dies gilt auch für Spulmaschinen z.B. nach dem Artikel "Der Beitrag elektronisch gesteuerter Textilmaschinen zur betrieblichen Informationstechnik" von Dr. T. Rüge (Reutlinger Spinnerei Kolloquium 2/3 Dezember 1987.

Die fahrbaren Hilfsaggregate haben je eine eigene autonome Steuerung - siehe z.B. EP 295406, EP 394671 oder EP 394708 (Obj. 2083). Obwohl diese Steuerungen autonom arbeiten, ist jede der Maschinensteuerung hierarchisch unterstellt. Bei einem bevorstehenden Doffvorgang z.B. werden die Roboter 226,228 durch die koordinierende Maschinensteuerung aus den Arbeitsbereichen der Doffautomaten 222,224 wegbefohlen (z.B. gemäss DOS 2455495).

Die Steuerung 514 der Fig. 17 ist ebenfalls als eine "Maschinensteuerung" zu betrachten, d.h. die Transporteinrichtung, welche zwei Verarbeitungsstufen verbindet, kann organisatorisch als eine "Maschine" betrachtet werden. Dies gilt nicht, wenn die betreffende Einrichtung in einer Maschine eingebaut bzw. einer Maschinensteuerung hierarchisch unterstellt ist.

### Die Sensorik der heutigen (Ring-) Spinnmaschine

Im Vergleich zu den Maschinen für die neuen Spinnverfahren (z.B. Rotor-bzw. Düsenspinnmaschinen) ist die Sensorik der heutigen Ringspinnmaschine ausgesprochen dürftig. Die Rotorspinnmaschine z.B. ist schon lang mit einer Sensorik versehen, welche sowohl den Zustand der einzelnen Spinnstelle als auch die Qualität des darin hergestellten Garnes wiedergibt (siehe EP 156153 und den darin erwähnten Stand der Technik. Für eine moderne Ueberwachung - siehe ITB Garnherstellung 1/91, Seite 23 bis 32.4). Aehnliche Systeme sind auch für die Filamentverarbeitung in der Falschdralltexturiermaschine entwickelt worden - siehe z.B. DOS 3005746. Die Spulmaschine, welche die Kopse der Ringspinnmaschine zu Kreuzspulen verarbeitet, ist heute bereits mit einer hochgezüchteten Sensorik versehen - siehe z.B. DOS 3928831, EP 365901, EP 415222 und US 4984749.

Es sind Vorschläge bekannt, wonach die Ringspinnmaschine ebenfalls mit einem hochentwickelten internen Kommunikationssystem und einer entsprechenden Sensorik zu versehen wäre - siehe z.B. EP 322698 und EP 389849 (= DOS 3910181). Solche Vorschläge erfordern (für ihre Realisierung) die Ueberarbeitung der gesamten Ringspinnmaschine, was wegen der damit verbundenen Kosten - und den entsprechenden Auswirkungen auf die Wettbewerbsfähigkeit des Verfahrens - nicht schlagartig sondern nur schrittweise vor sich gehen kann.

In der nächsten Zukunft wird die Ringspinnmaschine wohl deswegen kein internes Kommunikationssystem erhalten. Informationen über die Zustände der einzelnen Spinnstellen werden deswegen nicht aus einzelnen Sensoren an den jeweiligen Spinnstellen sondern durch fahrbare Ueberwachungsgeräte gesammelt werden müssen. Solche Geräte sind schon lange bekannt (z.B. aus DOS 2731019) - eine neuere Variante, wonach die Ueberwachung in einem Fadenbruchbehebungsautomat integriert wird, ist in EP 394671 (= DOS 3909746) gezeigt worden. Weitere Sensoren der Ringspinnmaschine, welche für die Beschickung der Aufsteckung wichtig sind, kann man beispielsweise aus WO 90/12133) entnehmen. Weitere Sensoren sind für den Betrieb der Kops- bzw. Leerhülsen-Transporteinrichtung notwendig, wobei solche Sensoren heute bekannt sind und deswegen hier nicht im Detail beschrieben werden.

Es ist zu bemerken, dass die Sensorik der Spinnmaschine angebaut statt eingebaut werden kann. Ein Beispiel eines solchen Systems ist im Artikel "Ueberwachung der Qualität von OE-Rotorgarnen" in ITB Garnherstellung 1/91, Seite 23 bis 32 zu finden.

Gleichgültig ob die Spinnmaschine mit einer an- oder eingebauter Sensorik versehen ist, wird sie mit mindestens gewissen Sensorikelementen ausgerüstet werden, die ihre Ausgangssignale an die Maschinensteuerung liefern. Diese "maschineneigenen" Signale ergeben ein Abbild des "Zustandes" der Maschine. Sie beantworten unter anderem Fragen, die für die "Sicherheit" wichtig sind, z.B.
- steht bzw. bewegt sich ein fahrbares Gerät momentan in einem Bereich, wo eine Kollision mit einem anderen Maschinenteil (z.B. einem eingebauten Doffautomat) entstehen könnte?
- steht eine Person bzw. ein Hindernis in der Fahrbahn eines bewegbaren Teiles?
- ist in der Maschine eine Operation gestartet worden, die nicht sofort abgebrochen werden darf?

Die entsprechenden Sensoren können als die Sicherheitssensorik der entsprechenden Maschine bezeichnet werden. Die Sensoren dürfen dabei auf einer Nachbarmaschine oder einem Transportsystem installiert sein. Wichtig ist, dass die Sensorensignale an die zutreffende Maschinensteuerung geleitet werden.

### Die Steuerung der Gesamtanlage

Der in Fig. 17 abgebildeter Spinnsaal stellt nur einen Teil der Gesamtanlage dar. Eine gesamte Spinnerei ist z.B. in DOS 3924779 gezeigt. Andere Beispiele sind in den folgenden Artikeln zu finden:
1. "Ueberwachung der Qualität von OE-Rotorgarnen" in ITB Garnherstellung 1/91, Seite 23 bis 32.
2. "Vergleich von Anforderungsprofil und Realität für eine automatisierte Spinnerei" in Textilpraxis International vom Oktober 1990 (ab Seite 1013).

Die Steuerung der Gesamtanlage ist derart ausgelegt, dass die Verarbeitungsstufen "verkettet" sind. Sofern der Transport zwischen den Verarbeitungsstufen automatisiert ist, können Signale von einer "Quelle" (liefernde Maschine) und einer "Senke" (zu beliefernde Maschine) von der Steuerung des Transportsystems zu einem "Fahrauftrag" verarbeitet werden, welcher sodann an eine Transporteinheit erteilt wird, (vorausgesetzt natürlich, dass eine freie beladene Transporteinheit bereitsteht). Wo gewisse Operationen noch nicht automatisiert sind, ist der Einsatz einer Bedienungsperson erforderlich.

Bevor eine Maschine eine Handlung über die Aktorik auslöst, wird zuerst im von der Sicherheitssensorik erzeugten Abbild des Maschinenzustandes kontrolliert, ob diese Handlung ohne Gefahr und Schaden durchgeführt werden kann.

Die Verkettung der Verarbeitungsstufen einer Spinnereianlage mit oder ohne Bedienungseingriffe ist heute weitgehend auf der "Maschinenebene" gelöst - Beispiele sind dem schon erwähnten Stand der Technik zu entnehmen. Die Verkettung der Anlage durch eine konventionelle oder noch weiterentwickelte Kombination von Aktorik/Sensorik/Steuerungen auf Maschinenebene (d.h. ohne den Prozessleitrechner) wird vorzugsweise beibehalten, damit ohne Prozessleitrechner oder bei Ausfall des Prozessleitrechners die Anlage, wenn auch mit reduzierter Leistung, betrieben werden kann.

### Der Prozessleitrechner

Den einzelnen Maschinensteuerung welche zu einem autonomen Betrieb der Anlage völlig ausreichen, wird nach dieser Erfindung ein Prozessleitrechner überlagert, um eine Prozessleitebene zu bilden. Fig. 19 zeigt eine entsprechende Ausführung, welche als Modifikation der Anlage nach Fig. 14 ausgeführt ist.

Fig. 19 zeigt schematisch die Verbindung des Prozessleitrechners mit einzelnen Maschinen. Die dadurch veranschaulichten Prinzipien gelten aber auch für die Verbindung mit weiteren bzw. mit allen Maschinen der Gesamtanlage. Fig. 19 zeigt schematisch eine mögliche Variante der Architektur für eine Prozess-Steuerung mit dem Leitrechner 340, dem Netzwerk 350, dem Rechner 390 und dem Rechner 410, die vorher im Zusammenhand mit Fig. 14 beschrieben wurden. Jeder Rechner 340,390 hat nach wie vor die ihm zugeordnete Speicher 343,345 bzw. 391 und Treiber 347,349 bzw. 393,394,395,396, wobei in Fig. 19 gewisse Elemente nicht mehr gezeigt sind, da sie aus Fig. 14 ersichtlich sind. Diese Prozess-Steuerung kann für die Gesamtanlage oder nur für einen Teil davon (z.B. für den Spinnsaal nach Fig. 2) vorgesehen werden.

Zusätzliche Treiber 412 bzw. bestimmen die notwendigen Schnittstellen für die Kommunikation zwischen zwei Zusatzrechnern 414 bzw. 418 und dem Netzwerk 350. Beide Zusatzrechner 414,418 sind mit Treibern (nicht gezeigt) versehen, welche die Schnittstellen zwischen dem jeweiligen Rechner 414,418 und Anzeige und Bedienungselemente, wovon nur die mit dem Rechner 414 verbundene Anzeige 420 und Bedienung 422 gezeigt sind.

Der Rechner 418 steuert eine Klimaanlage, welche den Saal klimatisiert, worin sich die durch die Rechner 390 und 410 gesteuerten Maschinen (unter anderem) befinden. Diese Anlage hat natürlich mit den Prozessabläufen an und für sich nichts unmittelbar zu tun, beeinflusst aber massgebend die Umgebung, worin diese Abläufe abgewickelt werden müssen und dementsprechend die erzielten Resultat dieser Abläufe. Ueber die Bedeutung der Kommunikation des Prozessleitrechners 340 mit dem Steuerungsrechner der Klimaanlage wird nachfolgend näher eingegangen. Die Klimaanlage ist auf jeden Fall mit einer Sensorik versehen, die in Fig. 19 schematisch durch einen Sensor 424 vertreten wird.

Der Rechner 414 steuert ein Datenerfassungssystem, welches der durch den Rechner 390 gesteuerten Maschine angebaut ist. Das Datenerfassungssystem umfasst eine Sensorik die in Fig. 19 durch die Sensoren 426 und 428 vertreten ist. Die Sensorik des Erfassungssystems gewinnt Messdaten über Zustände in der vom Rechner 390 gesteuerten Maschine, liefert aber die entsprechenden Ausgangssignale (Rohdaten) nicht an den Rechner 390, sondern an den Rechner 414. Dieser kann (muss aber nicht) eine Verbindung 430 mit dem Rechner 390 aufweisen, die nachfolgend näher erläutert wird, liefert die gewonnenen Rohdaten trotzdem über das Netzwerk 350 an den Rechner 340.

Der Prozessleitrechner 340 kann nun Steuerbefehle über das Netzwerk 350 an den Rechner 390 und/oder an den Rechner 414 senden. Wenn solche Steuerbefehle vom Rechner 414 empfangen werden und das Datenerfassungssystem betreffen, ist keine Kommunikation über die Verbindung 430 notwendig. Wenn solche Befehle aber die Aktorik der Maschine selbst betreffen, müssen sie über die Verbindung 430 an die Maschinensteuerung 390 weitergeleitet werden, falls sie vom Rechner 414 empfangen werden. Diese Anordnung ist nicht wünschenswert, da der Prozessleitrechner 340 vorzugsweise direkt mit dem Rechner 390 kommuniziert. Die Anordnung ist aber nicht aus der Erfindung ausgeschlossen und könnte sich als notwendig erweisen, falls die "Mitarbeit" des Datenerfassungssystems notwendig ist, um die aus seinen Daten gewonnenen Resultate in Steuerbefehle für die Maschine umzuwandeln. Dies könnte z.B. der Fall sein, wo das Datenerfassungssystem (vielleicht als eine Nachrüstung) von einem Lieferant zur Verfügung gestellt wird, der die Maschine selbst nicht liefert.

Fig. 19 zeigt auch ein weiterer Rechner 432, welcher dem Rechner 390 übergeordnet ist. Rechner 432 steuert z.B. ein Bedienungsgerät, welches der vom Rechner 390 gesteuerten Maschine ständig zugeordnet ist. Der Rechner 432 kann nicht direkt, sondern nur über den Rechner 390 mit dem Prozessleitrechner 340 kommunizieren. Der Rechner 432 erhält Steuerbefehle vom Rechner 390 und arbeitet sonst als autonome Einheit. Er steuert eigene Antriebe 434,436 und hat eigene Sensoren 438,440. Der Sensor 438 ist zur Ueberwachung eines Betriebszustandes der autonomen Einheit (des Bedienungsgerätes) vorgesehen - der Sensor 440 hingegen überwacht einen Zustand der vom Rechner 390 gesteuerten Maschine. Die Rohdaten des Sensors 440 werden dementsprechend kontinuierlich oder intermittierend an den Rechner 390 weitergeleitet.

Ein in der Maschine vorgesehenen Sensor 442 könnte zur Ueberwachung eines Zustandes der autonomen Einheit vorgesehen werden. Seine Rohdaten müssten nicht an den Rechner 432 weitergeleitet werden, würden aber die an ihn gerichteten Steuerbefehle beeinflussen.

Die Verbindung 444 zwischen den Rechnern 390 und 432 muss nicht kontinuierlich bestehen. Eine geeignete Verbindung zwischen der Steuerung einer Ringspinnmaschine und einem dieser Maschinen untergeordneten Ansetzroboters ist in unserer schweizerischen Patentanmeldung Nr 2830/91 vom 24.09.1991 gezeigt worden. Der Rechner 432 kann (wie die Rechner 390 und 414) mit eigenen Anzeige- bzw. Bedienungselementen versehen werden, die aber in Fig. 19 nicht gezeigt sind.

Wie in der Einleitung erwähnt wurde, ist es gelegentlich wichtig bzw. erwünscht, eine Maschine vom Prozessleitsystem abzukoppeln. Das ist in Fig. 19 schematisch durch die "Schalter" 446,448 die nicht "frei", sondern nur unter vorgegebenen Umständen betätigt werden können, was schematisch durch die Schlüssel 450 angedeutet ist. Diese Darstellung gilt nur zur Erklärung des Prinzipes - es ist nicht notwendig, die Verbindung mit dem Netzwerk zu unterbrechen, um die Abkoppelung zu bewirken. Das Abkoppeln wie sie auch immer bewirkt wird, darf nur unter kontrollierten Umständen (durch bestimmte Personen) durchgeführt werden.

Eine vom Prozessleitrechner abgekoppelte Maschine untersteht wieder der vollen Kontrolle der Bedienungspersonals. Es können dann z.B. Wartungsarbeiten oder Versuche (unabhängig vom geleiteten System) durchgeführt werden.

Das Abkoppeln einer Maschine muss
- an den Prozessleitrechner gemeldet werden,
- derart ausgeführt werden, dass die mit der abgekoppelten Maschine verketteten Maschine(n) weiterhin vom Prozessleitrechner geleitet werden können.

Die in Fig. 19 gezeigten Sensoren werden nun nachfolgend als Beispiele von verschiedenen Sensoren erwähnt, die in Zusammenhang mit den Funktionen des Leitrechners beschrieben werden soll.

### Maschinengerechte/Leitsystemgerechte Sensorik

Die heutige Sensorik der Textilmaschinen (z.B. der Spinnmaschinen, wie schon beschrieben) steht in enger Beziehung zur Aktorik und zur Steuerung der Maschine selbst. Die minimale Anzahl Sensoren wird verwendet, d.h. nur diejenigen Sensoren sind vorgesehen, die zum Steuern der Arbeitsabläufe der Maschine wesentlich sind. Diese Situation kommt aus folgenden Gründen zustande:
1. Jeder Sensor ist eine potentielle Fehlerquelle (diese Tatsache ist wohl bekannt, so dass Massnahmen zur Ueberwindung gelegentlicher Defekte getroffen werden müssen - siehe z.B. DOS 3939789 und EP 432401).
2. Zuverlässige Sensoren sind teuer. Massnahmen zur Ueberwachung ihrer Zuverlässigkeit sind aufwendig. Unterhaltsarbeiten verursachen zusätzliche Betriebskosten.
3. Die Folgekosten eines Sensorendefektes beschränken sich nicht auf die Ersatzteilkosten. Produktionsausfälle sind mögliche Auswirkungen eines Sensorausfalls. Unter Umständen noch schlimmer: minderwertige Produkte ("Ausschuss") kann von einem nicht mehr zuverlässigen, aber noch nicht ausgefallenen Sensor, verursacht werden.

Die Prozessdatenerfassung, die in der Einleitung erwähnt wurde, erfordert oft zusätzliche Sensoren, die meistens an der Maschine angebaut werden. Sie sind für den Maschinenablauf ohne Bedeutung und müssen deswegen zur Maschinensteuerung keine besondere Beziehung aufweisen. Wie schon angedeutet, kann dies zu Schwierigkeiten bei der Realisierung eines Prozessleitsystems führen, wo anhand der durch die Sensorik gewonnenen Daten die Prozesszentrale nicht bloss für den Betrieb nützliche Informationen, sondern auch Steuerbehle (Sollwerte) erzeugen soll.

Die bisherige Prozessdatenerfassung beschränkt sich meistens darauf, die Zustände einer Maschine darzustellen und diese, wenn möglich mit den Eigenschaften des Produktes dieser Maschine zu korrelieren. Dies ergibt aber höchstens ein partielles Bild der wahren Gründe für die genannten Eigenschaften und gegebenenfalls ein mehrdeutiges oder sogar verzerrtes Bild.

Die dem Prozessleitrechner zuzuordnenden Funktionen (die nachfolgend näher erläutert werden) erfordern eine weiterentwickelte Sensorik, die aber wahrscheinlich zum Teil wegen der schon aufgeführten Risiken nicht zum Steuern der Maschinenabläufe zur Anwendung kommt, sondern nur für die Zwecke der Prozessführung vorgesehen ist. Dies bedeutet, dass die zukünftigen Spinnereimaschinen mit Sensoren zwei verschiedener Typen ausgerüstet werden sollte
- diejenigen Sensoren, die zum Steuern der Maschinenabläufe notwendig sind (prozesswesentliche Sensoren), und
- diejenigen Sensoren, die zur Gewinnung von Daten für Prozessführungszwecke vorgesehen sind (prozessredundante Sensoren).

### Die Funktion des Prozessleitrechners bzw. erforderliche Daten

Die Funktionen eines Leitrechners sollten gegenüber den Funktionen eines Datenerfassungssystems abgegrenzt werden, wobei der Leitrechner auch Erfassungsaufgaben erfüllen kann. Die Datenerfassung stellt sich die Aufgabe, einen sinnvollen Ueberblick zu erzeugen. Möglichkeiten sind zum Beispiel im Artikel "Prozessdatenerfassung in der Ringspinnerei - Anwendung und Weiterverarbeitung der Prozessdaten von USTER RINGDATA am praktischen Beispiel" von W. Schaufelberger aufgezeigt. Der Artikel wurde am Reutlinger Spinnerei Kolloquium vom 2/3 Dezember l986 vorgetragen.

Die Funktion des Leitrechners im Spinnereibetrieb hängt von der ihm durch den Anwender gestellten Aufgabe ab. Diese Funktion kann z.B. darin bestehen, die grundsätzlich autonom betriebsfähige Anlage anhand einer vorgegebenen Strategie zu optimieren. Eine andere Aufgabe kann darin bestehen, die Anlage über längere Perioden ohne Bedienungseingriff betriebsfähig aufrechtzuerhalten, was sowohl Dispositions- wie auch Instandhaltungsaufgaben beinhaltet.

Um eine garnproduzierende Anlage auf diese Art und Weise zu leiten, braucht der Leitrechner z.B. die folgenden Informationen:
- die Betriebszustände der einzelnen Spinnstellen ("in Betrieb" / "stillgelegt"); diese Informationen dienen der Kalkulation und Ueberwachung der Gesamtproduktion der Anlage während eines gegebenen Zeitintervalls,
- die "Qualität" des erzeugten Produktes der einzelnen Spinnstellen, d.h. für jede Spinnstelle Informationen darüber, ob das in dieser Spinnstelle produzierte Garn innerhalb vorgegebener Toleranzwerte liegt oder nicht,
- die verschiedenen Garntypen, die an den einzelnen Spinnstellen produziert werden; dies dient der Hochrechnung und Ueberwachung der Fertigstellung gegebener Lose (Aufträge).

Es bestehen heutzutage keine Sensoren bzw. Sensorkombinationen, die imstande sind, den Garntyp einer laufenden Spinnstelle eindeutig festzustellen. Diese Informationen müssen deswegen von der Bedienung eingegeben werden. Solche Einstellungen werden hier nicht behandelt sondern werden in einer weiteren Patentanmeldung demnächst beschrieben werden.

Wie schon im vorangehenden Kapitel "Sensorik" angedeutet wurde, sind die Spinnmaschinen der neuen Spinnverfahren (Rotorspinnen, Düsenspinnen) meistens selbst in der Lage, die notwendigen Informationen an den Prozessleitrechner zu liefern, mindestens in dem Sinn, dass die Informationen in der Maschine selbst vorhanden sind. Die heutige Ringspinnmaschine hingegen ist nur über Hilfsaggregate imstande, die notwendigen Informationen zu liefern, wobei auch dann Qualitätsangaben vom Garnreiniger der Spulmaschine bezogen werden müssen (siehe z.B. EP 365901). Unsere schweizerische Patentameldung Nr. 697/91 vom 07.03.1991 zeigt eine Möglichkeit, das Zusammenwirken der Bedienungsautomaten der Ringspinnmaschine und des Garnreinigers der Spulmaschine dadurch zu optimieren, dass die Informationsbestände der beiden Maschinen ausgetauscht werden.

Der Prozessleitrechner hat daher vorzugsweise über sein Kommunikationsnetzwerk bzw. seine Kommunikationsnetzwerke den Zugang zu den ihn wichtigen Rohdaten der Sensorik in der Anlage, bzw. in den von ihm gesteuerten Maschinen. Die Rohdaten enthalten die volle Information eines bestimmten (für das Prozessleitsystem wichtigen) Sensors, allenfalls derart aufbereitet, dass Fehlinterpretationen vermieden werden. Als Beispiel wird angenommen, der Fadenbruchsensor an einer bestimmten Spinnstelle signalisiert einen Fadenbruch - aus diesem Signal kann nur dann auf einen Fadenbruch geschlossen werden, wenn die Spinnstelle (bzw. die Maschine) "in Betrieb" ist, was durch ein weiteres Signal (bzw. durch weitere Signale) in der Signalaufbereitung berücksichtigt werden muss.

Ein voll ausgebautes Prozessleitsystem ermöglicht
- einerseits die Korrelation der Produktionsresultate der verschiedenen Produktionseinheiten (Spinnstellen, Spulstellen, Streckenkopf, Kämmkopf, Karde usw.) mit deren Umgebungen,
- andererseits die Hochrechnung der erzielten Resultate, um das Disponieren der weiteren Abläufe nach den vom Anwender gestellten Anforderungen zu "optimieren" (zumindest in dem Sinn, dass Mindestanforderungen erfüllt werden oder eine Vorwarnung der Unerfüllbarkeit der gestellten Anforderungen gegeben wird).

Die "Umgebung" einer "Produktionseinheit" schliesst alle messbaren Faktoren ein, die einen erkennbaren Einfluss auf die Produktionsresultate dieser Einheit ausüben kann. Die "Produktionsresultate" umfassen sowohl quantitative wie auch qualitative Grössen. Diese Einflussfaktoren schliessen die folgenden Faktoren ein:
- die Verfügbarkeit vom Bedienungspersonal und Bedienungseinrichtungen
- die Verfügbarkeit des erforderlichen Vorlagematerials (Quantität und Qualität)
- der Zustand der Einheit selbst und der sie direkt zugeordneten "Dienstleistungen" (Antriebselemente, Steuerungen, Energiezufuhr, Führungselemente usw.)
- Umweltsfaktoren, insbesondere Klimafaktoren. Diese können sowohl Mikroumweltsfaktoren (in der unmittelbaren Umgebung der betroffenen Einheit) wie auch Makroumweltsfaktoren, die eine Mehrzahl von Einheiten (oder sogar Maschinen) beeinflussen.

### Sensorik für die Produktionsresultate:

Qualitätssensoren sind in unserer europäischen Patentanmeldung Nr. 41 04 29 für verschiedene Anforderungen aufgeführt.

"Quantitätssensoren" umfassen z.B. Signalgeber, welche die Prozesseinstellungen der betreffenden Maschine angeben (z.B. Spindeltouren, Lieferung usw.) und auch Sensoren, die feststellen, ob eine gegebene Produktionseinheit effektiv produziert oder nicht.

### Sensorik zur Korrelation mit der Umgebung:

Wichtig in dieser Kategorie ist die Materialflussverfolgung, welche die Korrelation der Werte von verketteten Produktionseinheiten ermöglicht. Lösungen sind z.B. aus unserer PCT Anmeldung Nr. PCT/CH/91/00151 vom 19.07.1991 sowie (zum Teil) aus DOS 3603002 bzw. DOS 4112073 bekannt.

Sensoren, welche die Zustände der Maschinenelemente feststellen, umfassen z.B. unter anderem Vibrationssensoren und Energieaufnahmesensoren. Diese Kategorie umfasst auch Sicherheitssensoren wie z.B. Temperaturmessfühler z.B. nach DOS 4011944. Die Sicherheitsaufgabe ist primär auf der Maschinenebene zu lösen - die Sicherheitsdaten sind aber ebenfalls für das Prozessleitsystem von Bedeutung, da das System zum feststellen von den Ursachen für Risiken dadurch ausgelegt werden kann, dass eine Korrelationsanalyse mit anderen vorhandenen Sensorensignale durchgeführt wird.

Die (Makro-, Mikro-) Umwelteinflüsse können durch Klimasensoren z.B. für den ganzen Saal und/oder in der Nähe einer gegebenen Produktionseinheit gemessen werden. Die zutreffenden Grössen sind z.B. Temperatur, Partikel- bzw. Flugbelastung der Luft, Luftfeuchtigkeit oder sogar Luftströmungsrichtung und/oder Geschwindigkeit. Die Makroumweltfaktoren können z.B. durch die Sensorik einer Klimaanlage z.B. Sensor 424, Fig. 19 festgestellt werden. Die Mikroumweltfaktoren müssen im "eigenen Raum" der zutreffenden Produktionseinheit festgestellt werden z.B. durch Anbringung der entsprechenden Sensorik in der Maschine selbst, in einer dieser Maschine anfahrbaren Bedienungseinrichtung z.B. Sensor 440, Fig. 19 oder durch das Bedienungspersonal. Im letzteren Fall müssen die Messwerte vom Personal derart in einer Kommunikationsvorrichtung eingegeben werden, dass sie davon über dem Kommunikationssystem an den Prozessleitrechner weitergeleitet werden können.

### Sensorik für die Hochrechnung zur Wartungs-/Unterhaltszwecke:

Eine wichtige Aufgabe eines Prozessleitrechners ist die "Instandhaltung" der Anlage, ihrer Maschinen, Einrichtungen und Elemente und zwar aus verschiedenen Gründen:
- Defekte verursachen (mittelbar oder unmittelbar) Qualitäts- bzw. Produktionseinbusse
- Wartungs- bzw. Unterhaltsarbeiten müssen oft vom Bedienungspersonal durchgeführt werden und Menschen stehen in der zukünftigen Spinnerei nicht jederzeit zur Verfügung. Eine wichtige Frage ist deswegen, nicht bloss, was gemacht werden muss, sondern auch wann diese Arbeiten anfallen werden.

Lösungen dieser Probleme sind in unserer deutschen Patentanmeldung Nr. 4131247 vom 20.09.1991 aufgeführt, wobei jede Maschine vorzugsweise mit einem Betriebsstundenmodul ausgerüstet wird.

### Sensorik für die Produktionsplanung:

Ein Hilfsmittel für die Produktionsplanung, die in einem Prozessleitsystem integriert werden kann, ist in unserer Schweizerischen Patentanmeldung Nr. 1374/91 vom 07.05.1991 gezeigt worden. Wichtig bei solchen Planungssystemen ist die Hochrechnung der Produktionsleistung der verschiedenen Maschinen der gesteuerten Anlage, um die Verfügbarkeit dieser Maschinen für die Erledigung der anfallenden Produktionsaufträge zu ermöglichen. Vorzugsweise werden dabei hochgerechneten bzw. erzielten Ist-Leistungen mit geplanten bzw. erwarteten Soll-Leistungen verglichen. Abweichungen von der Soll-Leistung können im schwerwiegenden Fällen mit anderen gesammelten Daten korreliert werden, um Verbesserungen auszuarbeiten bzw. Planänderungen vorzuschlagen.

### Sensorik für die Produktionssteuerung bzw. Optimierung:

Gemäss unserer deutschen Patentanmeldung Nr. 4127990 vom 23.08.1991 ist es möglich, Optimierungsroutine durchzuarbeiten, welche allenfalls Verbesserungen auch gegenüber einer planmässig arbeitenden Anlage ausarbeiten können.

### Sensorik für die Personalverfügbarkeit:

Wie schon angedeutet, ist die Anwesenheit des Personals weiterhin für die Ausführung gewisser Abläufe wesentlich. Es ist daher wichtig, solche Arbeiten zu planen, so dass sie anfallen, wenn die Anwesenheit der notwendigen Menschen vernünftigerweise erwartet werden kann. Wichtige Abläufe dieser Art sind:
- Auftragsdisposition (Sortimentswechsel)
- Prozessablauf (Beheben von gewissen Störungen)
- Wartung/Unterhalt (Schmieren, Läuferwechsel)
- Materialfluss (Materialzufuhr über das Wochenende)

Dieser Aspekt des Prozessleitsystems kann mit dem Betriebsleitrechner (Personalführung) verbunden werden.

### Korrelationsfunktion:

Die (prozessredundante) Sensorik nun vorgeschlagen ermöglicht eine "tiefergehende" Untersuchung der Ursachen für festgestellte Resultate (Leistungsdaten). Dies ist besonders für die Schätzung der Gründe für Störungen wichtig. Produktionsausfälle können z.B. durch die folgenden Ursachen ausgelöst werden:
- Klimaänderungen (Makro- oder Mikro-)
- Materialfehler
- Maschinenfehler (Vibrationen, Verschleiss)
- fehlende Dienstleistungen (Energiezufuhr, Ausfall eines Bedienungsautomaten)
- fehlendes Personal
- Unfälle

Die Korrelation der Resultate einer Maschine, mit denen von anderen Maschinen, kann hier zu wichtigen Schlüssen führen.

### Prozessleitsystem / Maschinensteuerung

Die Erfindung beruht auf einer klaren "Aufgabenteilung" zwischen dem Prozessleitsystem (Prozessleitrechner) und den Maschinensteuerungen.

Es ist die Aufgabe des Prozessleitsystems, "vorausschauend" (auf der Basis einer ihm vorgegebenen "Strategie") zu "disponieren", d.h. das Prozessleitsystem muss Trends bzw. Tendenzen im Prozessablauf der Gesamtanlage erkennen und die einzelnen Sollwerte im Hinblick auf die Strategie optimieren. Um diese Aufgaben zu erfüllen, braucht das Prozessleitsystem (der Prozessleitrechner) Informationen bezüglich des Betriebszustandes für jede Arbeitsstelle der Anlage. Dies stellt hohe Anforderungen an die Informationsübertragungsfähigkeiten des Netzwerkes bzw. der Netzwerke zwischen den Maschinen und dem Rechner. Das Prozessleitsystem muss aber nicht kontinuierlich über den momentanen Stand der Anlage informiert werden, sondern ist gegenüber Verzögerungen in der Datenübertragung unempfindlich, vorausgesetzt dass diese Verzögerungen die Trends noch so frühzeitig erkennen lassen, dass das Prozessleitsystem wenn notwendig korrigierend eingreifen kann.

Demgegenüber ist es nicht Aufgabe des Prozessleitsystems, jede letzte Operation in der Anlage zu steuern. Dies bleibt die Aufgabe der Maschinensteuerungen, die je ein Abbild der momentanen Zustände der von ihnen gesteuerten Elemente und Aggregate gespeichert haben müssen. Der Prozessleitrechner hat ein Abbild der Gesamtanlage gespeichert, das den momentanen Zustand aller für den Prozessleitrechner relevanten Daten darstellen muss und zum Feststellen von Zustandsänderungen ausgelegt ist, und zwar mit einer maximalen Verzögerung, die in Abhängigkeit von der schnellsten zu erwartenden Zustandsänderungen festgelegt wird.

Der Prozessleitrechner hat dementsprechend Zugriff zu den Rohdaten der Sensorik der Anlage, aber keine direkten "Steuerungsbefugnisse". Der Prozessleitrechner gibt Steuerbefehle im Sinne von Sollwerten an die Maschinensteuerung ab, die aber diese Befehle erst nach Verarbeitung durch das eigene Steuerprogramm und unter Berücksichtigung den momentan abgebildeten Zustandes der von ihr gesteuerten Elemente und Aggregate als Steuerungssignale an die Aktorik weitergibt.

Es werden nachfolgen mögliche Anwendungen des Prozessleitsystems aufgeführt. Es wäre im Prinzip möglich, einige Funktionen des Prozessleitsystems (z.B. die Datenerfassung und gewisse Aspekte der Korrelationsanalyse) auch in jeder Maschinensteuerung abzuwickeln. Dies aber belastet die Maschinensteuerung mit Funktionen, die keinen Unmittelbaren Einfluss auf die Maschinenabläufe ausüben dürfen, weil die durch diese Funktionen gewonnenen Resultate "auslegungsbedürftig" sind. (d.h. allein nicht eindeutig aussagefähig sind). Dies gilt insbesondere für die Korrelationsanalyse. Was eine einzige Maschinensteuerung auf keinen Fall durchführen kann, ist eine Korrelationsanalyse mit Werten von anderen Maschinen auszuführen, es sei denn, die "korrelierende" Maschine selbst sei mit dem Prozessleitrechner ausgerüstet, so dass in der Gruppe eine Maschine als "Prozessleitmaschine" bestimmt ist (vgl. z.B. DOS 4008794).

### Plausibilitätskontrolle

Die Software der Maschinensteuerung muss die vom Leitrechner empfangenen Steuerbefehle auf ihre Plausibilität kontrollieren. Dies gilt für alle Aspekte der steuerbaren Abläufe, so dass die Maschinensteuerung eine "Berechtigung" erhalten kann, einen Steuerbefehl "in Frage zu stellen", wenn dieser Befehl mit dem in der Maschinensteuerung abgespeicherten Abbild des Maschinenzustandes nicht zusammenpasst. Die Software der Maschinensteuerung kann z.B. derart ausgelegt werden, dass sie einen solchen Steuerbefehl erst dann befolgt, wenn er durch eine Eingabe des Personals bestätigt wird.

Ein Widerspruch zwischen einem Steuerbefehl und dem Sicherheitszustand der Maschine (wie dieser Zustand in den Speichern der Maschinensteuerung abgebildet wird), muss auf jeden Fall zu einem Alarm führen, (auch dann wenn der Befehl "bestätigt" wird), weil diese Situation bei allen vorgesehenen Abläufen ausgeschlossen wird. Das "Vorkommen" der Situation deutet dementsprechend auf einen gefährlichen Defekt des Systems.

### Bidirektionaler Informationsaustausch

Es ist wünschenswert, die Kommunikationskanäle zu und von dem Leitrechner auf eine minimale Anzahl zu begrenzen. Es sind für solche Kanäle strenge Anforderungen an die zu übertragenden Signale zu erfüllen, was vorbestimmte Schnittstellenkonfiguration am Netzwerk bzw. der Netzwerke erfordert. (siehe z.B. den Artikel "Datenschnittstellen an Textilmaschinen. Zwischenbericht über die Ausschusstätigkeit der VDI-Fachgruppe Textil und Bekleidung", in Melliand Textilberichte, 11/1987, Seite 825). Die Erfüllung dieser Ahforderungen findet vorzugsweise durch Signalaufbereitung in der Maschinensteuerung bzw. in einer an der Maschine angebauten Datenstation statt. Die Kommunikation einer Maschinensteuerung mit ihrer Aktorik kann unabhängig von diesen Anforderungen erreicht werden und zwar (wenn notwendig) auf unterschiedliche Weise für die verschiedenen Aktorikelemente. Durch die in dieser Anmeldung erwähnten Beispiele zeigen wir die Vielfalt der Konfigurationen, die von einem Prozessleitrechner geleitet werden können. In einer Anordnung nach Fig. 19 wäre es daher wünschenswert, wenn möglich, die Kommunikation mit dem Leitrechner entweder über die Maschinensteuerung oder über den Rechner 414 (aber nicht über beide) abzuwickeln. Dadurch wird es möglich, die Anzahl Uebertragungsmittel in der Anlage einzuschränken.

### Klimasensorik

Die Erfahrung zeigt nun, dass der Spinnprozess sehr empfindlich auf "Klimawerte" reagiert. Diese Aussage gilt sowohl für den Spinnsaal als ganzes (Makroklima) als auch für die nähere Umgebung einer einzigen Spinnstelle (Mikroklima). Die Klimawerte des ganzen Saales werden normalerweise von der Klimaanlage zentral gesteuert bzw. geregelt (siehe Rechner 418, Fig.19) und können nur beschränkt an die Maschinen als Individuen angepasst werden.

Die wahren Ursachen für Leistungsänderungen einer gegebenen Maschine können aber in "klimatischen" Aenderungen in der unmittelbaren Nähe dieser Maschine liegen, die im Durchschnittswert der zentralen Klimaanlage nicht feststellbar sind. Das Abschalten einer Nachbarmaschine kann z.B. für eine gewisse Periode zu einer merklichen örtlichen Temperaturänderung in der Umgebung der Nachbarmaschine(n) führen. Diese örtliche Temperaturänderung wirkt sich erst viel später und in einer abgeschwächten Grössenordnung auf die Zentrale aus, hat aber in der Zwischenzeit möglicherweise zu einer Aenderung des Laufverhaltens in einer betroffenen Maschine geführt, welche sich sowohl bei der ersten Aenderung als auch bei nachfolgender Rückkehr zu "Normalbedingungen" sich ungünstig auswirkt.

Es ist daher jetzt vorgesehen, die Maschine selbst mit einer "Klimasensorik" zu versehen, zumindest
- für diejenigen Maschinen (z.B. Endspinnmaschinen), welche von ihrer Umgebung kaum abgeschirmt werden können und durch das Klima ihrer Umgebung merklich beeinflusst werden, und
- zumindest für diejenigen Klimawerte, die einen merklichen Einfluss auf das Laufverhalten in der Maschine ausüben (Temperatur und/oder Luftfeuchtigkeit).

Das Feststellen eindeutiger "Klimawerte" für eine Längsteilmaschine erzeugt die eigenen Probleme. In einer Ringspinnmaschine z.B. können die Klimawerte mindestens an drei Stellen des Spinnprozesses einen Einfluss ausüben, nämlich
- im Vorlagematerialpuffer (im Gatter, auch Aufsteckung genannt),
- am Spinndreieck (am Lieferzylinder), und
- an der Ring/Läufer-Einheit.

Es muss dabei berücksichtigt werden, dass die Klimawerte sich auch über die Maschinenlänge merklich verändern können, was Unterschiede der Leistung von Spinnstelle zu Spinnstelle erklären kann.

Es ist heutzutage kaum denkbar, jede Spinnstelle mit eigener Klimasensorik auszurüsten. Es wäre aber möglich, die Maschine mit einer "Laufkatze" zu versehen, welche mit der notwendigen Klimasensorik ausgerüstet ist und der Maschine entlang zumindest in einem der vorerwähnten Bereiche auf eine geeignete Führung bewegt werden kann. Es könnten z.B. drei solche Laufkatzen vorgesehen werden, die je einen Bereich (Gatter, Lieferzylinder, Ringbank) abtasten und ihre Werte an die Maschinensteuerung übermitteln.

Ein fahrbares Bedienungsgerät könnte aber den gleichen Zweck erfüllen, wobei dieses Gerät entweder speziell für die Erfassung von Klimwerten gestaltet ist oder diese Funktion zusätzlich zu einer anderen Funktion (z.B. Gatterbeschickung oder Fadenansetzen) übernimmt. Es könnte z.B. ein fahrbares Gerät vorgesehen werden, welches zur detaillierten Untersuchung vom Mikroklima einer einzelnen Spinnstelle vorgesehen ist, wenn sonst keine Erklärung für Abweichungen von den Normwerten für diese Spinnstellen feststellbar sind. Ein solches Gerät könnte einer bestimmten Maschine interimistisch zugeordnet und sonst zum Fahren zwischen den Maschinen angeordet werden. Ein solcher Gerät könnte z.B. insbesondere örtliche Luftströmungen oder Staubbelastungen feststellen, die den Spinnprozess an der betroffenen Stelle stören.

### Zustandssensorik für die Aktorikelemente

Diese Sensorik soll feststellen, ob die Arbeitsabläufe der Maschine nicht durch die Auswirkung eines Unfalles (Missgeschicks) oder wegen Verschleiss an den Maschinenteilen beeinträchtigt sind. Die Sensorik kann kaum auf jede mögliche Fehlerquelle einzel abgerichtet sein, muss sich daher auf Indizien abstützen. Solche Indizien sind:
- die erforderliche Energie, um vorgegebene Resultate zu erzielen, bzw. die Energiezufuhr an die einzelnen Aktorikelemente der Maschine,
- Schwingungen bzw. Vibrationen (inkl. Lärmemissionen) an vorbestimmten Stellen.

Jede Maschine kann ohne weiteres mit Sensoren versehen werden, welche die Gesamtenergiezufuhr an die Maschine messen bzw. die Gesamtzufuhr für die verschiedenen Energieträger (Strom, Druckluft usw.) einzeln messen.

Es kann aber zusätzlich z.B. den Stromzufuhr an einzelne Motoren der Maschinenaktorik gemessen werden, und zwar bei verschiedenen Betriebsbedingungen z.B. Leerlauf, Volllast oder sogar periodisch unter speziell dafür vorgesehenen Testbedingungen ("Selbsttest"). Nach einer Analog/Digital Umwandlung können die entsprechenden Werte auch an den Prozessleitrechner weitergeleitet werden. Diese Messungen sind ohne weiteres möglich, wo frequenzgesteuerte Motoren über Umrichter gespeist werden.

Es können an vorbestimmten Stellen akustische Sensoren bzw. auf mechanische Vibrationen ansprechende Sensoren (z.B. Piezo-Elemente) vorgesehen werden. Diese Sensoren könnten aber auch an "Laufkatzen" (wie die schon erwähnte Klimasensorik) vorgesehen werden.

### Personalplan, Bedienungseingriffe

In Bezug auf Personal kann nur eine "Sensorik" vorgesehen werden, welche auf Eingaben vom Personal selbst reagiert. Diese "Eingaben" können z.B. absichtlich (z.B. über eine Tastatur) oder als Nebenerscheinung einer vorgegebenen Handlung getätigt werden.

Ein wesentlicher Aspekt der Dispisitionsfunktion des Leitrechners ist die Abschätzung der Verfügbarkeit des Personals. Es hat z.B. meistens keinen Sinn im heutigen Europa einen Sortimentswechsel, (welcher bedienungsintensiv ist) um 02.00 Uhr morgens oder am Samstagnachmittag einzuplanen. Es hat genausowenig Sinn, ein Sortimentswechsel gerade bevor einem Schichtwechsel einzuplanen.

Der Leitrechner bzw. seine Software muss dementsprechend mit einem "Kalender" versehen werden, welcher die wahrscheinliche Verfügbarkeit des Bedienungspersonals über einen vorgegebenen Zeitraum darstellt.

Es ist nun möglich, für die ganze Belegschaft, gewisse Termine im voraus festzulegen, wo alle im wesentlichen gleich betroffen sind (z.B. Betriebsferien, Wochenende, allgemeine Feiertage). Solche Termine können für eine relativ lange Periode in einem "Betriebskalender" eingegeben werden, welcher nur nach einem langen Intervall (z.B. einem Jahr) nachgeführt werden muss.

Ein solcher Betriebskalender reicht aber nicht aus, um die Verfügbarkeit des einzelnen Mitarbeiters zu schätzen z.B. weil er oder sie zusätzlich die eigenen individuellen Ferien bezieht, oder nur bereit ist, gewisse Schichten zu arbeiten, oder krank ist, oder ...........

Es sprechen nun zumindest die folgenden Gründe dafür, für jeden Mitarbeiter als ein Individuum einen eigenen "Zeitplan" für eine vorgegebene Periode (z.B. eine Woche oder einen Monat) mit ihm oder ihr im voraus festzulegen und im Prozessleitrechner einzugeben:
- es sind zukünftig nur noch wenige Mitarbeiter in der Spinnerei beschäftigt, so dass sich der Aufwand, sie als Individuen zu behandeln, in Grenzen bleibt,
- die einzelnen Mitarbeiter sind umso wichtiger, je weniger davon insgesamt vorgesehen sind (gewisse Arbeiten können ohne die spezialisierten Fachkräfte nicht bewältigt werden).

Nach Eingabe der Zeitpläne für die Belegschaft kann der Prozessleitrechner diese Angaben (zusammen mit dem vorher bestimmten Betriebskalender) mit den anfallenden wesentlichen und wünschenswerten Arbeiten vergleichen und "Arbeitspläne" für die zu einer gegebenen Zeit (z.B. über eine Schicht) verfügbare Personal zur Verfügung stellen.

### Anwendung eines Leitsystems nach dieser Erfindung

Es sind hier nur einige Beispiele der Anwendung des Systems aufgeführt.

Ein wichtiger Aspekt eines Leitsystems ist die Vermeidung oder die Behandlung von "Problemen" in der Herstellung
- a) der gewünschten Qualität,
- b) der (realistisch) zu erwartenden Menge

Dazu sollen kritische Grössen überwacht und mit voraussehbaren potentiellen Problemursachen korreliert werden.

Eine kritische Grösse der Qualität einer Spinnmaschine ist die Anzahl Fadenbrüche. Die Bedeutung dieser Grösse geht weit ausserhalb der Bedeutung der einzelnen Ansetzer, die wegen der heutigen hochentwickelten Ansetztechnologie an und für sich keine besonderen Probleme hervorrufen. Eine (relativ) hohe Anzahl Fadenbrüche ist ein klares Zeichen von (relativ) schlechtem Garn (siehe den Artikel "Auswirkungen von Fadenbrüchen beim Ring- und OE-Rotorspinnen auf die Garneigenschaften und das Laufverhalten in Webereivorbereitung und Weberei" von S. Schlichter und Prof.Dr.J.Lünenschloss, Vortrag an der Dornbirn Chemiefasertagung, 25 bis 27. September 1985).

Eine kritische Grösse der "Mengenkapazität" einer Spinnmaschine ist ihr "Nutzeffekt" (auch "Wirkungsgrad" genannt). Es sind verschiedene Definitionen dieser Grösse verwendet. Im Grossen und Ganzen geht es darum, die erzielte Produktion (Ist-Wert) mit einer realistischen Schätzung der erzielbaren Produktion (Soll-Wert) zu vergleichen.

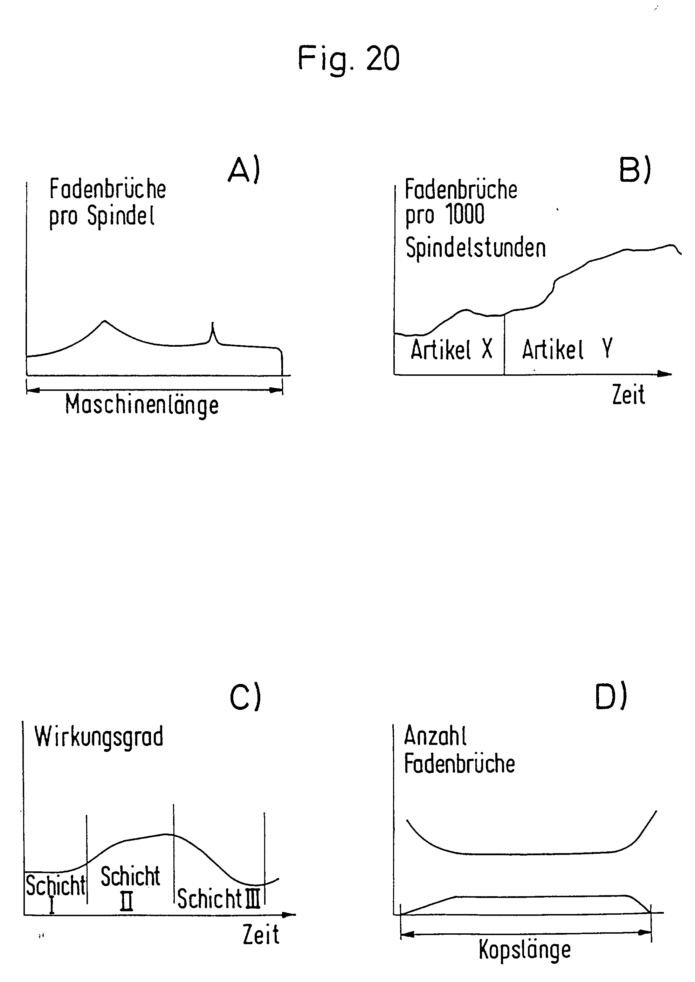

Datenerfassung:
Wie schon angedeutet, hat ein Leitsystem eine Datenerfassungsfunktion zu erfüllen. Hier geht es darum, einen "Ueberblick zu schaffen", womöglich durch "Visualisierung" der Daten. Das heute dazu geeigneteste Mittel ist die Bildschirmgraphik. Die Skizzen der Fig. 20 zeigen (als Beispiele der möglichen Darstellungen) für eine bestimmte Maschine:
- Fig.20A: - die Verteilung der Fadenbruchhäufigkeit über die Maschinenlänge für einen gegebenen Zeitraum (oder Artikel oder Satz von Maschineneinstellungen oder..),
- Fig.20B: - der Verlauf der Fadenbruchwertigkeit (Fadenbrüche pro 1000 Spinnstunden) über Zeit für zwei verschiedene Artikel X und Y,
- Fig.20C -: der Verlauf des Nutzeffektes (Wirkungsgrades) der Maschine über mehrere Schichtwechsel hinweg,
- Fig.20D: - der Verlauf der Fadenbruchhäufigkeit über den Packungsaufbau (-länge).

### Diagnostik:

Um den Prozess zu leiten, muss der Prozessleitrechner auch als Diagnosegerät arbeiten, um die Ursachen für Abweichungen von den erwarteten Resultaten (Sollwerte) feststellen zu können. Das geeigneteste Mittel zu diesem Zweck ist die Korrelationsanalyse.

Sowohl die Fadenbruchhäufigkeit wie auch der Nutzeffekt für eine gegebene Maschine sind vorzugsweise mit den folgenden Grössen zu korrelieren:
- Klimawerte
- Maschineneinstellungen
- Schichtwechsel
- Artikeltyp
- entsprechenden Werte anderer Maschinen des gleichen Types
- entsprechenden Werte anderer mit der betroffenen Maschine verketteten Maschinen.

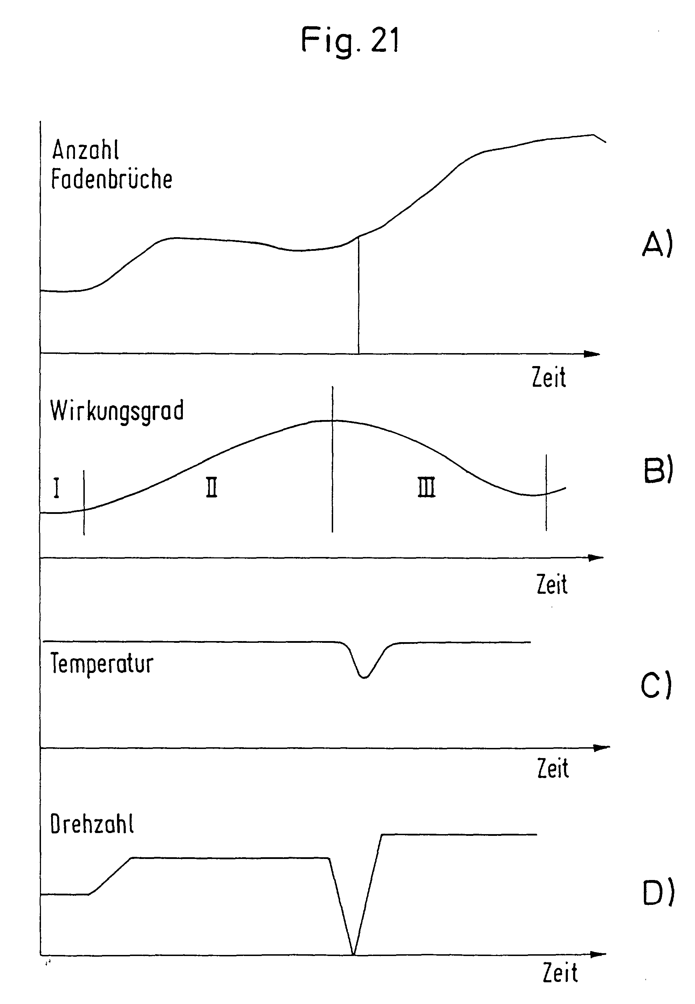

Die einfachste Korrelationsmethodik liegt darin, die Werte zu speichern und sie bei Bedarf für das Personal zu "Visualisieren". Zu diesem Zweck sollen zumindest zwei und vorzugsweise mehrere Darstellungen nebeneinander angeordnet werden, wie dies als Beispiel in Fig. 21 gezeigt ist. Die Skizze der Fig. 21A zeigt den Fadenbruchwertigkeitsverlauf und Fig. 21B den Nutzeffektverlauf, die auch in Fig. 20 gezeigt wurden. Die Darstellung nach Fig. 21 enthält aber auch in Fig. 21C (für die gleiche Zeitperiode) den Verlauf der "Klimawerte" (Auswahl: Temperatur, Luftfeuchtigkeit usw.) und in Fig. 21D den entsprechenden Verlauf der Maschineneinstellungen (Auswahl: z.B. Verzug, Drehzahl).

Falls die Platzverhältnisse auf dem Bildschirm das Nebeneinanderstellen von mehr als zwei Verläufe nicht zulässt, können zwei Grössen nebeneinander gestellt werden, wobei die eine Grösse ein kritischer Qualitäts- oder Mengenparameter darstellt (z.B. Fadenbruchrate oder Nutzeffekt) und die zweite Grösse ein wichtiger Einflussfaktor darstellt. Die entsprechenden Werte können der Reihe nach aus den jeweiligen Speichern geholt werden, so dass die verschiedenen Korrelationen (bzw. das Fehlen einer Korrelation) sequentiell visualisiert werden können.

Die Anlage kann derart angeordnet werden, dass die Visualisierung der Korrelationen für eine gegebene Maschine auf der Bedienungsoberfläche dieser Maschine erfolgen kann. Diese Möglichkeiten werden aber hier (aus Platzgründen) -Bildschirmgrösse beschränkt sein. Es kann daher in der Zentrale eine geeignete Anzeige vorgesehen werden, welche eine tiefergehende Analyse auf einer breiteren Basis durch Visualisierung ermöglicht.

Das gleiche Prinzip kann zur Anwendung kommen, wenn die Werte von verschiedenen Maschinen miteinander verglichen werden sollen. Es könnte z.B. ohne weiteres die Werte für zwei Nachbarmaschinen des gleichen Types nebeneinander abgebildet werden. Wo aber viele Maschinen des gleichen Types in der Anlage vorhanden sind (siehe z.B. der Ringspinnsaal, Fig.6), wird es schwierig sein, alle Werte auf diese Art miteinander zu vergleichen.

In einem solchen Fall können Durchschnittswerte für die geleiteten Maschinengruppen abgeleitet werden, oder es können die statistische Verteilung der Werte abgeleitet, und die "Position" einer bestimmten Maschine in dieser Verteilung analysiert werden.

### Erzeugen von Steuerbefehlen:

Es gibt grundsätzlich zwei Arten von Steuerbefehlen
- diejenige, die ohne Eingriff des Bedienungspersonals ausgeführt werden können, und
- diejenige, die nur durch über solche Eingriffe ausgeführt werden können.

Die effektiven Möglichkeiten in einem gegebenen Fall hängen vom Maschinentyp ab und zwar davon, ob die Aktorik der Maschine automatisch steuerbar ist, oder nicht. In einer modernen Ringspinnmaschine wird zumindest die Drehzahl eines Hauptantriebsmotors automatisch steuerbar sein, der Verzug bzw. der Wechsel des Läufertypes hingegen nicht.

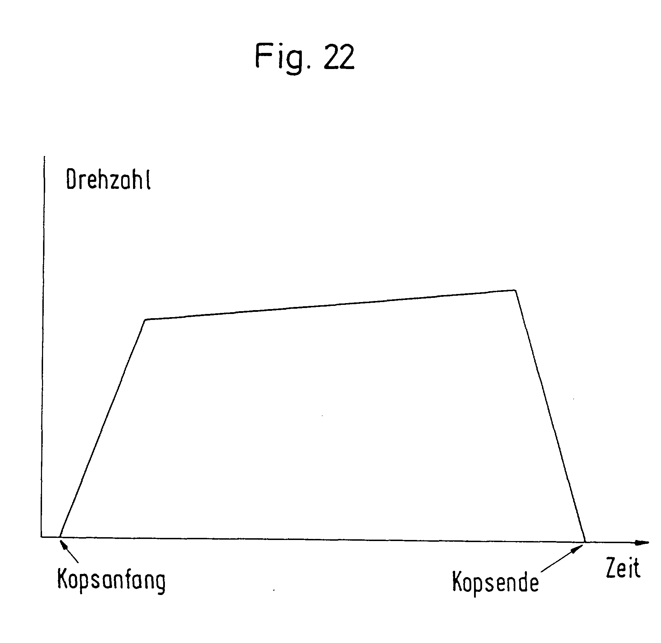

Sofern die Maschineneinstellungen automatisch steuerbar sind, kann der Leitrechner diese Einstellungen durch an die Maschinensteuerung(en) abgegebenen Sollwerte beeinflussen und an die Umgebungsänderungen anpassen. Wenn z.B. eine Analyse nach Fig. 20D ergibt, dass die Anzahl Fadenbrüche in der Anfahrphase (Teil A) des Kopsaufbaues die realistisch erwarteten (empirisch über Zeit) ermittelten Werte übersteigt, kann die "Drehzahlkurve" (Fig.22) der Maschine angepasst werden, um die Anzahl Fadenbrüche in dieser Phase wieder zu senken. Diese Kurve definiert die Sollwerte für die Drehzahl des Hauptantriebmotors (oder der einzelnen Spindelmotoren) über den Kopsaufbau. (siehe z.B. CH 1374/91 - vgl. DOS 4015638).

Wenn hingegen an der Spulmaschine festgestellt wird, dass die Garnhaarigkeit der eingestellten Werte nicht genügt, (Läuferwechsel angezeigt) oder dass die Garnnummer sogar falsch ist (Verzugsänderung angezeigt), kann der Leitrechner eine Instruktion über das Netzwerk 330 an die betroffene Maschine senden, wobei diese Instruktion auf der Bedienungsoberfläche der Maschine angezeigt werden muss. Falls die Anpassung der Betriebsbedingungen dringend notwendig ist, muss der Leitrechner gleichzeitig ein Warnruf (z.B. nach PCT Patentanmeldung Nr. WO91/16481) an das zutreffende Personal senden, um die geeigneteste Person auf die Notwendigkeit/Art der erforderlichen Neueinstellung aufmerksam zu machen (Alarmsystem).

Auf keinen Fall kann der Prozessleitrechner direkt in die Arbeitsabläufe des Prozesses eingreifen - dies bleibt den Maschinensteuerungen bewahrt. Der Einfluss des Leitrechners ist ein mittelbarer Einfluss über Sollwerte bzw. Bedienungsunterstützung.

### Abspeichern / Abruf von Rohdaten

Es ist praktisch nicht möglich, gleichzeitig alle der erwähnten Analysen durchzuführen, anzuzeigen und in Aenderungen in den Maschinenabläufen umzuwandeln. Die an den Prozessleitrechner gelieferten Rohdaten müssen dementsprechend gespeichert werden (Datenbanken) und bei Bedarf wieder aus dem Speicher abrufbar sein. Dabei können gewisse kritische Analysen (quasi) kontinuierlich durchgeführt werden - andere hingegen erst, wenn die kontinuierlichen Analysen eine Abweichung zwischen einem festgestellten Maschinenzustand und einer für diese Maschine vorgesehenen Zustand (Sollzustand) ermitteln.

## Patentansprüche

1. Spinnereianlage mit einem Prozessleitrechner (340) für mindestens eine Maschinengruppe (300,310,320,330), wobei jede Maschine der Gruppe mit einer eigenen Steuerung (390) versehen ist, welche die Aktorik der Maschine samt allfälliger dieser Maschine zugeordneten Hilfsaggregate steuert, und mit einem Netzwerk (350) für die bidirektionale Kommunikation zwischen dem Rechner (340) und jeder Maschine der Gruppe, wobei zumindest eine Maschine der Gruppe sowohl mit prozesswesentlichen (397,438,440,442) als auch mit prozessredundanten (424,426,428) Sensoren versehen ist, die Ausgangssignale erzeugen, welche zusammen einem Abbild des Zustandes der Maschine ermöglichen und
Mittel vorgesehen sind, um die Rohdaten sowohl der prozesswesentlichen wie auch der prozessredundanten Sensoren über das Netzwerk (350) an den Prozessleitrechner (340) weiterzuleiten, **dadurch gekennzeichnet, dass** der Rechner mit Software versehen ist, um die Rohdaten zu speichern, allfällige Korrelationen zwischen den gespeicherten Rohdaten der Sensoren von vorbestimmten Sensorenkombinationen zu ermitteln, Steuerbefehle in Abhängigkeit von ermittelten Korrelationen zu erzeugen und diese Steuerbefehle über das Netzwerk an die Steuerung (390) der Maschine zu senden, wofür die Korrelationen ermittelt wurden.

2. Eine Anlage nach Anspruch 1, **dadurch gekennzeichnet, dass**
die Software des Leitrechners (340) derart ausgelegt ist, dass die Korrelationsanalyse zumindest dann durchgeführt wird, wenn das durch die Rohdaten vermittelte Abbild eines Maschinenzustandes von einem Sollzustand abweicht.

3. Eine Anlage nach Anspruch 1 oder 2, **dadurch gekennzeichnet, dass**
die prozessredundanten (424,426,428) Sensoren zumindest ein Sensor (424) umfassen, welcher auf Klimawerte in der Umgebung der Maschine anspricht.

4. Eine Anlage nach Anspruch 1,2 oder 3, **dadurch gekennzeichnet, dass**
die prozessredundanten (424,426,428) Sensoren zumindest ein Sensor umfassen, der auf die Energiezufuhr an die Maschine bzw. an ein Aktorikelement der Maschine anspricht.

5. Eine Anlage nach einem der vorangehenden Ansprüche, **dadurch gekennzeichnet, dass**
die prozessredundanten (424,426,428) Sensoren zumindest ein Sensor anfassen, der auf Vibrationen bzw. Lärmemissionen in der Maschine anspricht.

6. Eine Anlage nach einem der vorangehenden Ansprüche, **dadurch gekennzeichnet, dass**
der Steuerbefehl die Maschinensteuerung (390) dazu anregt, eine Instruktion an der Bedienungsoberfläche der Maschine anzuzeigen.

7. Eine Anlage nach Anspruch 6, **dadurch gekennzeichnet, dass** die Steuerbefehle ohne Eingriff des Bedienungspersonals ausgeführt werden

8. Eine Anlage nach Anspruch 6, **dadurch gekennzeichnet, dass** die Steuerbefehle nur durch Eingriff des Bedienungspersonals ausgeführt werden.

9. Eine Anlage nach einem der vorangehenden Ansprüche,
**dadurch gekennzeichnet, dass**
die Maschinensteuerung (390) mit Software versehen ist, welche anhand der Ausgangssignale von mit dieser Steuerung direkt oder indirekt verbundenen Sensoren ein Abbild des Maschinenzustandes erstellt und die Steuerbefehle des Prozessleitrechners (340) anhand des letztgenannten Abbildes auf ihre Plausibilität prüfen.

10. Eine Anlage nach einem der vorangehenden Ansprüche, **dadurch gekennzeichnet, dass**
die Rohdaten sowohl der prozesswesentlichen (397,438,440,442) wie auch der prozessredundanten (424,426,428) Sensoren an die Maschinensteuerung (390) geliefert werden und da auf die Uebertragung an den Leitrechner (340) aufbereitet werden.

11. Eine Anlage nach einem der vorangehenden Ansprüche, **dadurch gekennzeichnet, dass**
der Rechner (340) mit Software versehen ist, welche sowohl auf einen abgespeicherten Betriebskalender wie auch auf abgespeicherte Zeitpläne für die einzelnen Mitarbeiter der Belegschaft Zugriff hat und darauf eingerichtet ist, die aus dem Kalender bzw. aus den Zeitplänen abgeleitete Verfügbarkeit des Personals mit den anfallenden Arbeiten der Arbeitsabläufen der Maschinen der geleiteten Gruppe zu koordinieren.

## Claims

1. Spinning plant with a process control computer (340) for at least one group of machines (300, 310, 320, 330), in which arrangement each machine of the group is provided with its own control device (390) controlling the actuating means of the machine, including auxiliary aggregates possibly co-ordinated to this machine, and with a network (350) for the bi-directional communication between the computer (340) and each machine of the group, where at least one machine of the group is provided with sensors relevant for the process (397, 438, 440,442) as well as with sensors redundant for the process (424, 426, 428), which sensors generate output signals, which together yield an overall picture of the state of the machine, and means are provided for transmitting the raw data from the sensors relevant for the process as well as from the sensors redundant for the process via the network (350) to the process control computer,
**characterised in that**
the computer is equipped with software for storing the raw data, to determine possible correlations between the stored raw data supplied by the sensors of predetermined sensor combinations, to generate control commands in function of determined correlations, and to transmit these control commands via the network to the control device (390) of the machine for which these correlations were determined.

2. Plant according to the claim 1,
**characterised in that**
the software of the process control computer (340) is laid out in such a manner that the correlation analysis is effected at least if the overall picture of the state of the machine transmitted deviates from a desired state of the machine.

3. Plant according to the claim 1 or 2,
**characterised in that**
the sensors redundant for the process (424, 426, 428) comprise at least one sensor (424) monitoring air condition values in the room surrounding the machine.

4. Plant according to the claim 1, 2 or 3,
**characterised in that**
the sensors redundant for the process (424, 426, 428) comprise at least one sensor monitoring the energy supply values to the machine, or to an actuating means of the machine respectively.

5. Plant according to one of the preceding claims,
**characterised in that**
the sensors redundant for the process (424, 426, 428) comprise at least one sensor monitoring vibrations, or noise emissions respectively, of the machine.

6. Plant according to one of the preceding claims,
**characterised in that**
the control command activates the machine control device (390) to display an instruction on the operator interface of the machine.

7. Plant according to the claim 6,
**characterised in that**
the control commands are effected without action by the operating personnel.

8. Plant according to the claim 6,
**characterised in that**
the control commands are effected only upon action by the operating personnel.

9. Plant according to one of the preceding claims,
**characterised in that**
the machine control device (390) is provided with software based on the output signals from sensors co-ordinated to this control device directly or indirectly, for establishing an overall picture of the state of the machine and for checking the control commands generated by the process control computer (340) as to their plausibility.

10. Plant according to one of the preceding claims,
**characterised in that**
the raw data supplied by the sensors relevant for the process (397, 438, 440, 442) as well as by the sensors redundant for the process (424, 426, 428) are transmitted to the machine control device (390), where they are processed for the transmission to the process control computer.

11. Plant according to one of the preceding claims,
**characterised in that**
the computer (340) is provided with software, which has access to a stored operations calendar as well as to stored schedules for the individual operators of the plant, and which is laid out in such a manner that it can co-ordinate the availability of the personnel determined according to the calendar, and the operator schedules respectively, with the operating tasks required for the machine operations within the group of machines controlled.

## Revendications

1. Installation de filature possédant un ordinateur pilote de processus (340) pour au moins un groupe de machines (300,310,320,330), et où chaque machine du groupe est pourvue d'un asservissement individuel (390) qui commande le système d'entraînement de la machine, y compris les appareils auxiliaires éventuels adjoints à cette machine, et avec un réseau (350) réalisant la communication bidirectionnelle entre l'ordinateur (340) et chaque machine du groupe, et où au moins une machine du groupe est pourvue aussi bien de détecteurs essentiels pour le processus (397,438,440,442) que de détecteurs redondants pour le processus (424,426,428), qui produisent des signaux de sortie qui, conjointement, permettent de produire une Image de l'état de la machine,
et des moyens sont prévus, afin de transmettre les données brutes, aussi bien des détecteurs essentiels pour le processus que des détecteurs redondants pour le processus, vers l'ordinateur pilote de processus (340), via le réseau (350),
**caractérisée par le fait que**
l'ordinateur est pourvu d'un logiciel, servant à emmagasiner les données brutes, à détecter d'éventuelles corrélations
existant entre les données brutes emmagasinées des détecteurs par rapport à des combinaisons de détecteurs prédéterminées, à produire des ordres de commande en fonction des corrélations détectées, et à émettre, via le réseau, ces ordres de commande vers l'asservissement (390) de la machine, pour lequel les corrélations ont été détectées.

2. Une Installation selon revendication 1,
**caractérisée par le fait que**
le logiciel de l'ordinateur pilote (340) est conçu de telle manière que l'analyse de corrélation est au moins effectuée 2 dans le cas où l'image d'un état de machine, déterminée par les données brutes, dévie d'un état de consigne.

3. Une Installation selon revendication 1 ou 2,
**caractérisée par le fait que**
les détecteurs redondants pour le processus (424,426,428) comprennent au moins un détecteur (424) qui réagit aux valeurs climatiques de l'environnement de la machine.

4. Une Installation selon revendication 1, 2 ou 3,
**caractérisée par le fait que**
les détecteurs redondants pour le processus (424,426,428) comprennent au moins un détecteur qui réagit à l'alimentation énergétique vers la machine, respectivement vers un élément d'entraînement de la machine.

5. Une Installation selon Tune des revendications précédentes,
**caractérisée par le fait que**
les détecteurs redondants pour le processus (424,426,428) comprennent au moins un détecteur qui réagit aux vibrations respectivement aux émissions de bruits dans la machine.

6. Une Installation selon Tune des revendications précédentes,
**caractérisée par le fait que**
l'ordre de commande amorce l'asservissement de machine (390) pour indiquer une instruction au tableau de service de la machine.

7. Une Installation selon revendication 6,
**caractérisée par le fait que**
les ordres de commande sont exécutes sans intervention du personnel de service.

8. Une Installation selon revendication 6,
**caractérisée par le fait que**
les ordres de commande ne sont exécutes que par Intervention du personnel de service.

9. Une Installation selon Tune des revendications précédentes,
**caractérisée par le fait que**
l'asservissement de machine (390) est pourvu d'un logiciel qui, en fonction des signaux de sortie des détecteurs qui
sont relies directement ou indirectement avec cet asservissement, effectue une Image de l'état de la machine, et examine la plausibilité des ordres de commande de l'ordinateur pilote de processus (340), en fonction de l'image citée an dernier.

10. Une Installation selon Tune des revendications **précédentes**,
**caractérisée par le fait que**,
les données brutes aussi bien des détecteurs essentiels pour le processus (397,438,440,442) que des détecteurs redondants
pour le processus (424,426,428) sont livrées vers l'asservissement de machine (390) et sont préparées, à cet endroit,
pour la transmission vers l'ordinateur pilote (340).

11. Une Installation selon Tune des revendications précédentes,
**caractérisée par le fait que**
l'ordinateur (340) est pourvu d'un logiciel qui a accès aussi bien à un calendrier de marche mémorisé qu'à des horaires mémorisés pour les collaborateurs individuels du personnel d'équipes, et qui est conçu pour coordonner la disponibilité du personnel, à partir du calendrier respectivement des horaires, en fonction des travaux résultant des déroulements de travail des machines du groupe dirige.
